# EUROPEAN PATENT APPLICATION

(11) **EP 4 711 889 A1**
(43) Date of publication of application: **18.03.2026**
(21) Application number: 24826329.5
(22) Date of filing: 11.03.2024
(51) Int. Cl.: G06F 1/16, H01F 7/06, C22F 1/00, G06F 1/26

(54) **ELECTRONIC DEVICE COMPRISING MAGNETIC MEMBER**

(30) Priority: 20.06.2023 KR 20230078985; 09.08.2023 KR 20230104328
(71) Applicant: Samsung Electronics Co., Ltd., Suwon-si, Gyeonggi-do 16677 (KR)
(72) Inventor: KIM, Younggyun, Suwon-si Gyeonggi-do 16677 (KR); HONG, Ingook, Suwon-si Gyeonggi-do 16677 (KR)
(74) Representative: Gulde & Partner
(86) International application number: PCT/KR2024/095477
(87) International publication number: WO 2024/263014

(57) **Abstract**

An electronic device according to an embodiment may include a hinge structure, a first housing connected to the hinge structure, a second housing connected to the hinge structure, and folded with respect to the first housing based on the hinge structure, a first member including a shape memory alloy member which includes a spring portion having a shape allowing compression and extension and a first magnetic member which includes a plurality of magnets arranged along a first direction, the first member disposed adjacent to one edge of the first housing, a second member including a second magnetic member which includes a plurality of magnets arranged along a second direction, and disposed adjacent to one edge of the second housing, and a power supply circuit electrically connected to the shape memory alloy member. The first magnetic member may be moved along the first direction by power supplied to the shape memory alloy member through the power supply circuit. Besides, various embodiments obtained from the specification are possible.

## Description

### [Technical Field]

Various embodiments disclosed in this document relate to an electronic device including a magnetic member.

### [Background Art]

A magnet may be used in various electronic devices such as a speaker, a smartphone, a tablet personal computer, a wearable device, or a home appliance (e.g., a refrigerator, a microwave oven, a washing machine, and an audio device). For example, a foldable electronic device may include the magnet to facilitate opening and closing operations of the foldable electronic device. The magnet may have a property (repulsion) of repelling between magnets having the same polarity and a property of moving in a stable direction.

A shape memory alloy may have a property of returning to its original shape before deformation if heat is applied. The foldable electronic device may include the shape memory alloy to facilitate the opening and closing operations of the foldable electronic device.

### [Disclosure of Invention]

### [Solution to Problem]

An electronic device according to an embodiment may include a hinge structure, a first housing connected to the hinge structure, a second housing connected to the hinge structure, and folded with respect to the first housing based on the hinge structure, a first member including a shape memory alloy member which includes a spring portion having a shape allowing compression and extension and a first magnetic member which includes a plurality of magnets arranged along a first direction, the first member disposed adjacent to one edge of the first housing, a second member including a second magnetic member which includes a plurality of magnets arranged along a second direction, and disposed adjacent to one edge of the second housing, and a power supply circuit electrically connected to the shape memory alloy member. The first magnetic member may be moved along the first direction by power supplied to the shape memory alloy member through the power supply circuit.

A movable member according to an embodiment may include a shape memory alloy member including a spring portion having a shape allowing compression and extension, and a magnetic member including a plurality of magnets arranged along a first direction. The magnetic member may be moved along the first direction by power supplied to the shape memory alloy member through the power supply circuit electrically connected to the shape memory alloy member.

An electronic device according to an embodiment may include a hinge structure, a first housing connected to the hinge structure, a second housing connected to the hinge structure and foldable with respect to the first housing based on the hinge structure, a first member including a first magnetic member including a plurality of magnets arranged in a first direction and disposed adjacent to one edge of the first housing, and a second member including a second magnetic member including a plurality of magnets arranged in a second direction and disposed adjacent to one edge of the second housing. The first magnetic member may be disposed to move in the first direction based on the second magnetic member.

### [Brief Description of Drawings]

FIG. 1 is a block diagram illustrating an electronic device within a network environment according to an embodiment.
FIG. 2 is a drawing illustrating a flat state of an electronic device according to an embodiment.
FIG. 3 is a drawing illustrating a folded state of an electronic device according to an embodiment.
FIG. 4 is an exploded perspective view of an electronic device according to an embodiment.
FIG. 5 is an exploded perspective view of an electronic device including a first member and a second member according to an embodiment.
FIG. 6 is a plan view illustrating an inside of an electronic device of FIG. 5.
FIG. 7 is a perspective view of a first member including a shape memory alloy member including a spring according to an embodiment.
FIG. 8 is a perspective view of a shape memory alloy member according to an embodiment.
FIG. 9 is a cross-sectional view illustrating a folded state of an electronic device according to an embodiment.
FIG. 10 is a cross-sectional view of an electronic device illustrating that a spring is compressed according to an embodiment.
FIG. 11 is a plan view of a first member according to an embodiment.
FIG. 12 is a plan view of a first member including a spring according to an embodiment.
FIG. 13 is a plan view of a spring according to an embodiment.
FIG. 14 is a plan view of a first member including a spring according to an embodiment.
FIG. 15 is a cross-sectional view of an electronic device including a plate spring according to an embodiment.
FIG. 16 is a plan view of a plate spring according to an embodiment.
FIG. 17 is a perspective view of a first member including a guide portion according to an embodiment.
FIG. 18 is a plan view of an electronic device in which a first member including a shape memory alloy member including a wire is disposed according to an embodiment.
FIG. 19 is a plan view of an electronic device including a motor according to an embodiment.
FIG. 20 is a plan view of an electronic device including a third member according to an embodiment.
FIG. 21 is a cross-sectional view of an electronic device including a first member according to an embodiment.

In relation to descriptions of the drawings, like or similar reference numerals may be used for like or similar components.

### [Mode for the Invention]

Hereinafter, various embodiments of the disclosure are described with reference to the accompanying drawings. However, this is not intended to limit the disclosure to specific embodiments, but should be understood to include various modifications, equivalents, and/or alternatives of the embodiments of the disclosure.

An electronic device according to various embodiments of this document may include at least one of, for example, a smartphone, a tablet personal computer (PC), a mobile phone, a video phone, an e-book reader, a desktop PC, a laptop PC, a netbook computer, a workstation, a server, a personal digital assistant (PDA), a portable multimedia player (PMP), an MP3 player, a mobile medical device, a camera, or a wearable device. According to various embodiments, the wearable device may include at least one of an accessory type (e.g., a watch, a ring, a bracelet, an anklet, a necklace, glasses, contact lenses, or a head-mounted-device (HMD)), a fabric or clothing-integrated type (e.g., an electronic garment), a body-attached type (e.g., a skin pad or a tattoo), or an implantable type (e.g., an implantable circuit).

In some embodiment, the electronic device may be a home appliance. The home appliance may include at least one of, for example, a television, a digital video disk (DVD) player, an audio, a refrigerator, an air conditioner, a vacuum cleaner, an oven, a microwave oven, a washing machine, an air purifier, a set-top box, a home automation control panel, a security control panel, a TV box, a game console, an electronic dictionary, an electronic key, a camcorder, or an electronic picture frame.

In an embodiment, the electronic device may include at least one of various medical devices (e.g., various portable medical measuring devices (a blood glucose meter, a heart rate monitor, a blood pressure monitor, or a body temperature monitor), magnetic resonance angiography (MRA), magnetic resonance imaging (MRI), computer tomography (CT), a camera, or an ultrasound device), a navigation device, a global navigation satellite system (GNSS), an event data recorder (EDR), a flight data recorder (FDR), an automobile infotainment device, electronic equipment for ships (e.g., a navigation device for a ship or a gyrocompass), avionics, a security device, a head portion for vehicles, an industrial or household robot, an automatic teller's machine (ATM) of an financial institution, a point of sales (POS) of a store, or an internet of things device (e.g., a light bulb, various sensors, an electric or gas meter, a sprinkler device, a fire alarm, a thermostat, a streetlight, a toaster, an exercise machine, a hot water tank, a heater, or a boiler).

According to some embodiment, the electronic device may include at least one of a part of furniture or a building/structure, an electronic board, an electronic signature receiving device, a projector, or various measuring devices (e.g., a water, electricity, gas, or radio wave measuring device). In various embodiments, the electronic device may be a combination of one or more of the various devices described above. The electronic device according to some embodiment may be a flexible electronic device. In addition, the electronic device according to the embodiment of this document is not limited to the devices described above, and may include a new electronic device according to technological advancement.

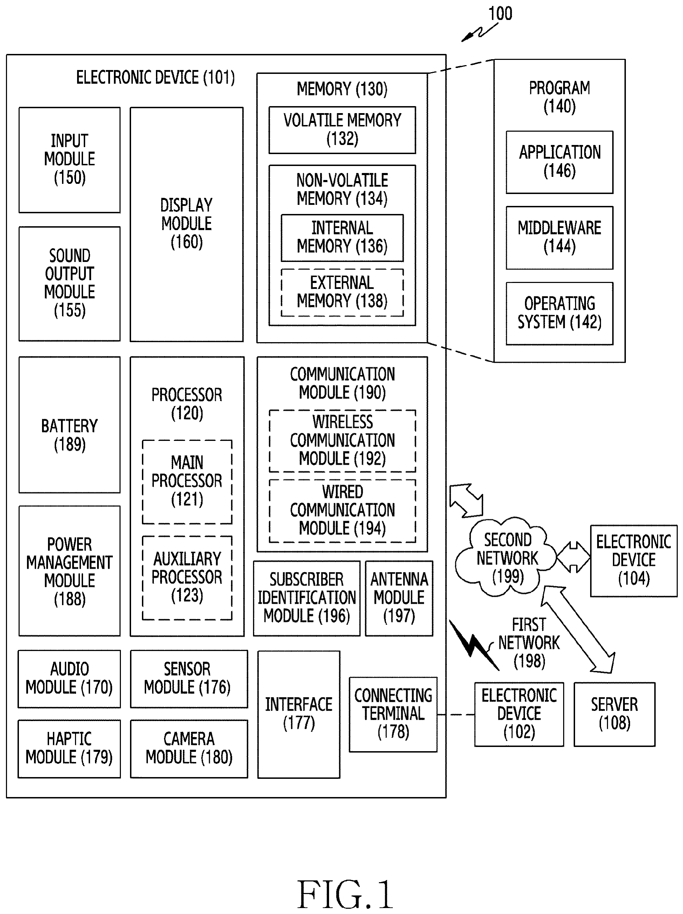

FIG. 1 is a block diagram of an electronic device 101 in a network environment 100, according to various embodiments. Referring to FIG. 1, the electronic device 101 in the network environment 100 may communicate with an electronic device 102 over a first network 198 (e.g., a short-range wireless communication network), or may communicate with an electronic device 104 or a server 108 over a second network 199 (e.g., a long-range wireless communication network). According to an embodiment, the electronic device 101 may communicate with the electronic device 104 via the server 108. According to an embodiment, the electronic device 101 may include a processor 120, a memory 130, an input device 150, an audio output device 155, a display device 160, an audio module 170, a sensor module 176, an interface 177, a haptic module 179, a camera module 180, a power management module 188, a battery 189, a communication module 190, a subscriber identification module 196, or an antenna module 197. In some embodiment, at least one (e.g., the display device 160 or the camera module 180) of the components may be omitted, or one or more other components may be added in the electronic device 101. In some embodiment, some of the components may be integrated as a single integrated circuit. For example, the sensor module 176 (e.g., a fingerprint sensor, an iris sensor, or a light sensor) may be implemented by being embedded in the display device 160 (e.g., a display).

The processor 120 may, for example, execute software (e.g., a program 140) to thus control at least one other component (e.g., a hardware or software component) of the electronic device 101 coupled to the processor 120, and perform various data processing or computation. According to an embodiment, as at least a part of the data processing or computation, the processor 120 may store a command or data received from other component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing device or an application processor) and an auxiliary processor 123 (e.g., a graphics processing device, an image signal processor, a sensor hub processor, or a communication processor) for operating independently from or in conjunction with the main processor 121. Additionally or alternatively, if the electronic device 101 includes the main processor 121 and the auxiliary processor 123, the auxiliary processor 123 may be configured to use less power than the main processor 121, or to be specific to a designated function. The auxiliary processor 123 may be implemented as separate from, or as a part of the main processor 121.

The auxiliary processor 123 may control at least some of functions or states related to at least one component (e.g., the display device 160, the sensor module 176, or the communication module 190) of the components of the electronic device 101, for example, instead of the main processor 121 while the main processor 121 is in an inactive state (e.g., sleeping), or together with the main processor 121 while the main processor 121 is in an active state (e.g., executing an application). According to an embodiment, the auxiliary processor 123 (e.g., an image signaling processor or a communication processor) may be implemented as a part of other component (e.g., the camera module 180 or the communication module 190) functionally related.

The memory 130 may store various data used by at least one component (e.g., the processor 120 or the sensor module 176) of the electronic device 101. The data may include, for example, software (e.g., the program 140), and input data or output data for a command related thereto. The memory 130 may include the volatile memory 132 or the non-volatile memory 134.

The program 140 may be stored as software in the memory 130, and may include, for example, an operating system 142, middleware 144 or an application 146.

The input device 150 may receive a command or data to be used by the component (e.g., the processor 120) of the electronic device 101 from the outside (e.g., a user) of the electronic device 101. The input device 150 may include, for example, a microphone, a mouse, a keyboard, a key (e.g., a button), or a digital pen (e.g., a stylus pen).

The audio output device 155 may output a sound signal to the outside of the electronic device 101. The audio output device 155 may include, for example, a speaker or a receiver. The speaker may be used for a general purpose such as multimedia playing or record playing, and the receiver may be used to receive an incoming call. According to an embodiment, the receiver may be implemented separately from, or as a part of the speaker.

The display device 160 may visually provide information to the outside (e.g., the user) of the electronic device 101. The display device 160 may include, for example, a display, a hologram device, or a projector and control circuitry for controlling a corresponding device. According to an embodiment, the display device 160 may include touch circuitry configured to detect a touch, or pressure circuitry (e.g., a pressure sensor) configured to measure an intensity of force generated by the touch.

The audio module 170 may convert a sound signal into an electrical signal, or convert an electrical signal into a sound signal. According to an embodiment, the audio module 170 may obtain the sound through the input device 150, or output the sound through the audio output device 155, or an external electronic device (e.g., the electronic device 102) (e.g., a speaker or a headphone) directly or wirelessly connected with the electronic device 101.

The sensor module 176 may detect an operation state (e.g., a power or a temperature) of the electronic device 101, or an external environment state (e.g., a user state), and generate an electrical signal or a data value corresponding to the detected state. According to an embodiment, the sensor module 176 may include, for example, a gesture sensor, a gyro sensor, a barometric sensor, a magnetic sensor, an acceleration sensor, a grip sensor, a proximity sensor, a color sensor, an infrared (IR) sensor, a biosensor, a temperature sensor, a humidity sensor, or an illuminance sensor.

The interface 177 may support one or more designated protocols to be used for the electronic device 101 to connect with the external electronic device (e.g., the electronic device 102) directly or wirelessly. According to an embodiment, the interface 177 may include, for example, a high definition multimedia interface (HDMI), a universal serial bus (USB) interface, a secure digital (SD) card interface, or an audio interface.

A connection terminal 178 may include a connector for physically connecting the electronic device 101 with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a motion) or an electrical stimulus which may be recognized by the user through tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 388 may be implemented as at least a part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable or a fuel cell.

The communication module 190 may support establishment of a direct (e.g., wired) communication channel or a wireless communication channel between the electronic device 101 and the external electronic device (e.g., the electronic device 102, the electronic device 104, or the server 108), and communication over the established communication channel. The communication module 190 may include one or more communication processors which are operated independently from the processor 120 (e.g., the application processor), and supports the direct (e.g., wired) communication or the wireless communication. According to an embodiment, the communication module 190 may include a wireless communication module 192 (e.g., a cellular communication module, a short-range wireless communication module, or a GNSS communication module) or a wired communication module 194 (e.g., a local area network (LAN) communication module, or a power line communication module). A corresponding communication module among these communication modules may communicate with the external electronic device via the first network 198 (e.g., a short-range communication network such as Bluetooth, wireless-fidelity (Wi-Fi) direct, or infrared data association (IrDA)) or the second network 199 (e.g., a long-range communication network such as a cellular network, Internet, or a computer network (e.g., a LAN or a wide area network (WAN)). These various communication modules may be integrated as a single component (e.g., a single chip), or may be implemented as a plurality of separate components (e.g., multiple chips). The wireless communication module 192 may identify and authenticate the electronic device 101 in the communication network such as the first network 198 or the second network 199 using subscriber information (e.g., international mobile subscriber identity (IMSI)) stored in the subscriber identification module 196.

The antenna module 197 may transmit or receive a signal or power to or from the outside (e.g., the external electronic device). According to an embodiment, the antenna module 197 may include an antenna including a radiator including a conductive material or a conductive pattern formed on a substrate (e.g., a printed circuit board (PCB)). According to an embodiment, the antenna module 197 may include a plurality of antennas. In this case, at least one antenna appropriate for the communication scheme used in the communication network such as the first network 198 or the second network 199 may be selected, for example, by the communication module 190 from the plurality of the antennas. The signal or the power may be transmitted or received between the communication module 190 and the external electronic device via the at least one antenna selected. According to some embodiment, other component (e.g., a radio frequency integrated circuit (RFIC)) than the radiator may be additionally formed as a part of the antenna module 197.

At least some of the components may be connected mutually to exchange signals (e.g., commands or data) therebetween through an inter-peripheral communication scheme (e.g., a bus, general purpose input and output (GPIO), serial peripheral interface (SPI), or mobile industry processor interface (MIPI)).

According to an embodiment, a command or data may be transmitted or received between the electronic device 101 and the external electronic device 104 via the server 108 connected to the second network 199. The electronic devices 102 and 104 each may be a device of the same or different type as or from the electronic device 101. According to an embodiment, all or some of operations executed at the electronic device 101 may be carried out at one or more of the external electronic devices 102, 104, or 108. For example, if the electronic device 101 needs to perform a function or a service automatically, or in response to a request from the user or other device, the electronic device 101 may request the one or more external electronic devices to perform at least a part of the function or the service, instead of or in addition to executing the function or the service. The one or more external electronic devices receiving the request may perform at least a part of the function or the service requested, or an additional function or service related to the request, and provide a result of the execution to the electronic device 101. The electronic device 101 may provide the result as at least a part of a response to the request, without or with further processing of the result. For doing so, for example, cloud computing, distributed computing, or client-server computing technology may be used.

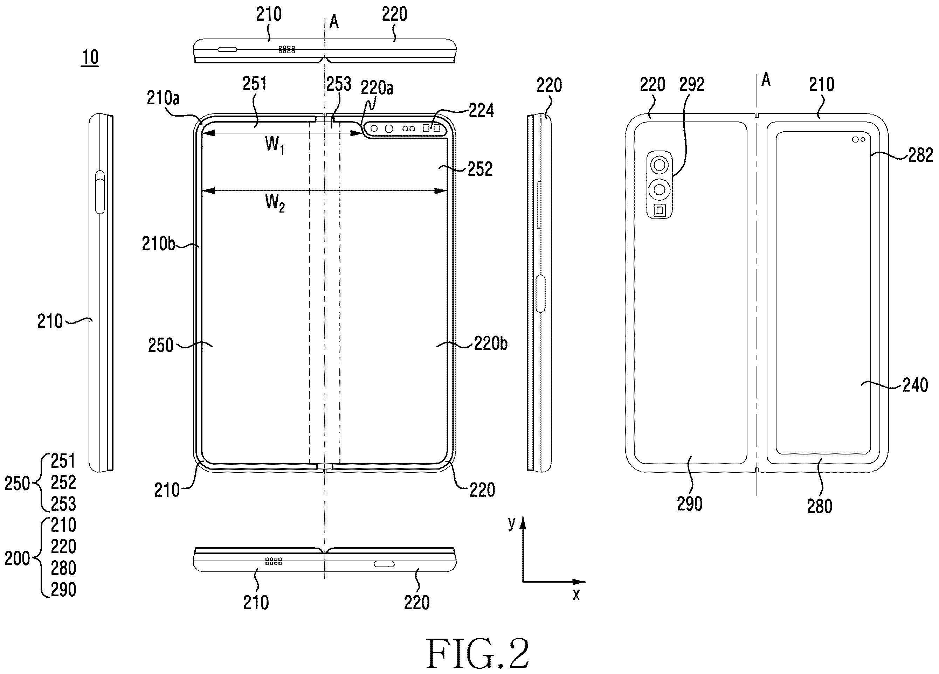

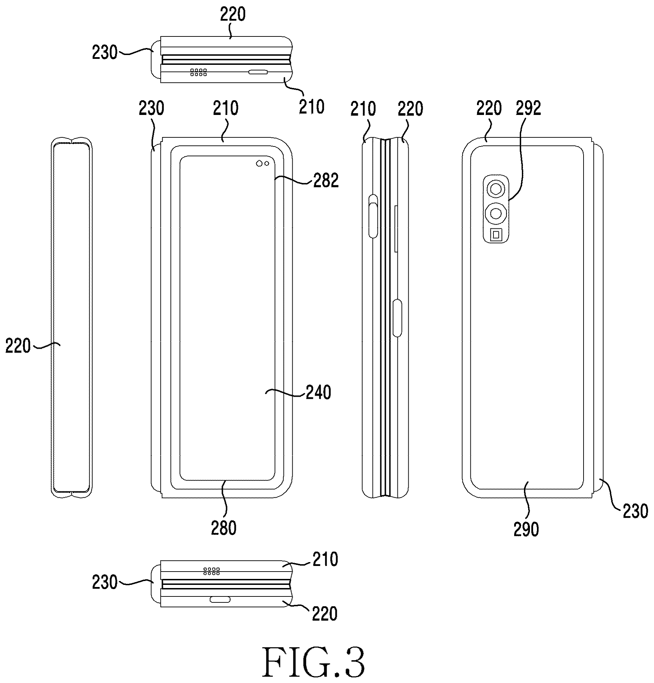

Referring to FIG. 2 and FIG. 3, in an embodiment, the electronic device 10 may include a foldable housing 200, a hinge cover 230 for covering a foldable portion of the foldable housing, and a flexible or foldable display 250 (hereafter, for brevity, a "display" 250) disposed within a space formed by the foldable housing 200. This document defines a surface on which the display 250 is disposed as a first surface or a front surface of the electronic device 10. An opposite surface to the front surface is defined as a second surface or a rear surface of the electronic device 10. In addition, a surface surrounding a space between the front surface and the rear surface is defined as a third surface or a side surface of the electronic device 10.

In an embodiment, the foldable housing 200 may include a first housing 210, a second housing 220 including a sensor area 224, a first rear cover 280, and a second rear cover 290. The foldable housing 200 of the electronic device 10 is not limited to the shape and the coupling shown in FIG. 2 and FIG. 3, and may be implemented by a combination and/or a coupling of other shapes or parts. For example, in an embodiment, the first housing 210 and the first rear cover 280 may be integrally formed, and the second housing 220 and the second rear cover 290 may be integrally formed.

In the illustrated embodiment, the first housing 210 and the second housing 220 may be disposed on both sides based on a folding axis (an axis A), and may have a substantially symmetrical shape with respect to the folding axis (the axis A). The first housing 210 and the second housing 220 may have a different angle or distance between them depending on whether the state of the electronic device 10 is a flat state, a folded state, or an intermediate state to be described. In the illustrated embodiment, unlike the first housing 210, the second housing 220 additionally includes the sensor area 224 in which various sensors are disposed, but may have a mutually symmetrical shape in other areas.

In an embodiment, as shown in FIG. 2, the first housing 210 and the second housing 220 may form a recess for accommodating the display 250. In the illustrated embodiment, due to the sensor area 224, the recess may have two or more different widths in a direction perpendicular to the folding axis A.

For example, the recess may have (1) a first width w1 between a first portion 210a of the first housing 210 parallel to the folding axis A and a first portion 220a formed at an edge of the sensor area 224 of the second housing 220, and (2) a second width w2 formed by a second portion 210b of the first housing 210 and a second portion 220b of the second housing 220 which does not correspond to the sensor area 224 and is parallel to the folding axis A. In this case, the second width w2 may be formed longer than the first width w1. For example, the first portion 210a of the first housing 210 and the first portion 220a of the second housing 220 having the mutually asymmetrical shapes may form the first width w1 of the recess, and the second portion 210b of the first housing 210 and the second portion 220b of the second housing 220 having the mutually symmetrical shapes may form the second width w2 of the recess. In an embodiment, the first portion 220a and the second portion 220b of the second housing 220 may have different distances from the folding axis A. The width of the recess is not limited to the illustrated example. In various embodiments, the recess may have a plurality of widths due to the shape of the sensor area 224 or a portion having asymmetrical shapes of the first housing 210 and the second housing 220.

In an embodiment, at least a part of the first housing 210 and the second housing 220 may be formed of a metallic material or a non-metallic material having a rigidity selected to support the display 250.

In an embodiment, the sensor area 224 may be formed to have a certain area adjacent to one corner of the second housing 220. However, the arrangement, the shape, and the size of the sensor area 224 are not limited to the illustrated example. For example, in an embodiment, the sensor area 224 may be provided in another corner of the second housing 220 or in any area between an upper corner and a lower corner. In an embodiment, components for performing various functions embedded in the electronic device 10 may be visually exposed to the front of the electronic device 10 through the sensor area 224, or through one or more openings provided in the sensor area 224. In various embodiments, the components may include various types of sensors. The sensor may include, for example, at least one of a front camera, a receiver or a proximity sensor.

The first rear cover 280 may be disposed on one side of the folding axis in the rear surface of the electronic device, and may have, for example, a substantially rectangular periphery, and the periphery may be surrounded by the first housing 210. Similarly, the second rear cover 290 may be disposed on the other side of the folding axis in the rear surface of the electronic device, with its periphery surrounded by the second housing 220.

In the illustrated embodiment, the first rear cover 280 and the second rear cover 290 may have substantially symmetrical shapes based on the folding axis (the axis A). However, the first rear cover 280 and the second rear cover 290 do not necessarily have the mutually symmetrical shapes, and in an embodiment, the electronic device 10 may include the first rear cover 280 and the second rear cover 290 in various shapes. In an embodiment, the first rear cover 280 may be integrally formed with the first housing 210, and the second rear cover 290 may be integrally formed with the second housing 220.

In an embodiment, the first rear cover 280, the second rear cover 290, the first housing 210, and the second housing 220 may form a space for arranging various components (e.g., a printed circuit board or a battery) of the electronic device 10. In an embodiment, one or more components may be disposed or visually exposed on the rear surface of the electronic device 10. For example, at least a part of the sub-display 240 may be visually exposed through a first rear area 282 of the first rear cover 280. In an embodiment, one or more components or sensors may be visually exposed through a second rear area 292 of the second rear cover 290. In various embodiments, the sensors may include a proximity sensor and/or a rear camera.

Referring to FIG. 3, the hinge cover 230 may be configured to be disposed between the first housing 210 and the second housing 220, to cover an internal component (e.g., a hinge structure). In an embodiment, the hinge cover 230 may be covered by a part of the first housing 210 and the second housing 220 or exposed to the outside, depending on the state (the flat state or the folded state) of the electronic device 10.

For example, as shown in FIG. 2, if the electronic device 10 is in the flat state, the hinge cover 230 may be covered by the first housing 210 and the second housing 220 not to be exposed. For example, if the electronic device 10 is in the folded state (e.g., a fully folded state) as shown in FIG. 3, the hinge cover 230 may be exposed to the outside between the first housing 210 and the second housing 220. For example, in the intermediate state in which the first housing 210 and the second housing 220 are folded with a certain angle, the hinge cover 230 may be partially exposed to the outside between the first housing 210 and the second housing 220. However, in this case, the exposed area may be smaller than that of the fully folded state. In an embodiment, the hinge cover 230 may include a curved surface.

The display 250 may be disposed in a space formed by the foldable housing 200. For example, the display 250 may be disposed in a recess formed by the foldable housing 200, and may form most of the front surface of the electronic device 10.

Accordingly, the front surface of the electronic device 10 may include the display 250, a partial area of the first housing 210 adjacent to the display 250, and a partial area of the second housing 220. The rear surface of the electronic device 10 may include the first rear cover 280, a partial area of the first housing 210 adjacent to the first rear cover 280, a second rear cover 290 and a partial area of the second housing 220 adjacent to the second rear cover 290.

The display 250 may indicate a display which may be transformed into a flat or curved surface in at least a partial area. In an embodiment, the display 250 may include a folding area 253, a first area 251 disposed on one side (the left side of the folding area 253 shown in FIG. 2) based on the folding area 253, and a second area 252 disposed on the other side (the right side of the folding area 253 shown in FIG. 2).

The area division of the display 250 shown in FIG. 2 is exemplary, and the display 250 may be divided into a plurality of areas (e.g., four or more or two) depending on the structure or function. For example, in the embodiment shown in FIG. 2, the areas of the display 250 may be divided by the folding area 253 extending parallel to the y-axis or the folding axis (the axis A), but the display 250 may be divided in the area based on another folding area (e.g., a folding area parallel to the x-axis) or another folding axis (e.g., a folding axis parallel to the x-axis) in an embodiment.

The first area 251 and the second area 252 may have substantially symmetrical shapes based on the folding area 253. However, unlike the first area 251, the second area 252 may include a notch which is cut depending on the presence of the sensor area 224, but may have a shape symmetrical to the first area 251 in other area. In other words, the first area 251 and the second area 252 may include a portion having the symmetrical shape and a portion having the asymmetrical shape.

Hereafter, operations of the first housing 210 and the second housing 220 and each area of the display 250 shall be described according to the state (e.g., the flat state and the folded state) of the electronic device 10.

In an embodiment, if the electronic device 10 is in the flat state (e.g., FIG. 2), the first housing 210 and the second housing 220 may be arranged to face the same direction at the angle of 180 degrees. The surface of the first area 251 and the surface of the second area 252 of the display 250 may form the angle of 180 degrees with each other, and face the same direction (e.g., toward the front of the electronic device). The folding area 253 may form the same plane as the first area 251 and the second area 252.

In an embodiment, if the electronic device 10 is in the folded state (e.g., FIG. 3), the first housing 210 and the second housing 220 may be arranged to face each other. The surface of the first area 251 and the surface of the second area 252 of the display 250 may form a narrow angle (e.g., between 0 degrees and 10 degrees), and face each other. At least a part of the folding area 253 may be formed as a curved surface having a certain curvature.

In an embodiment, if the electronic device 10 is in the intermediately folded state (e.g., FIG. 3), the first housing 210 and the second housing 220 may be arranged at a certain angle. The surface of the first area 251 and the surface of the second area 252 of the display 250 may form the angle which is greater than the folded state and smaller than the flat state. At least a part of the folding area 253 may be formed as a curved surface having a certain curvature, wherein the curvature may be smaller than that in the folded state.

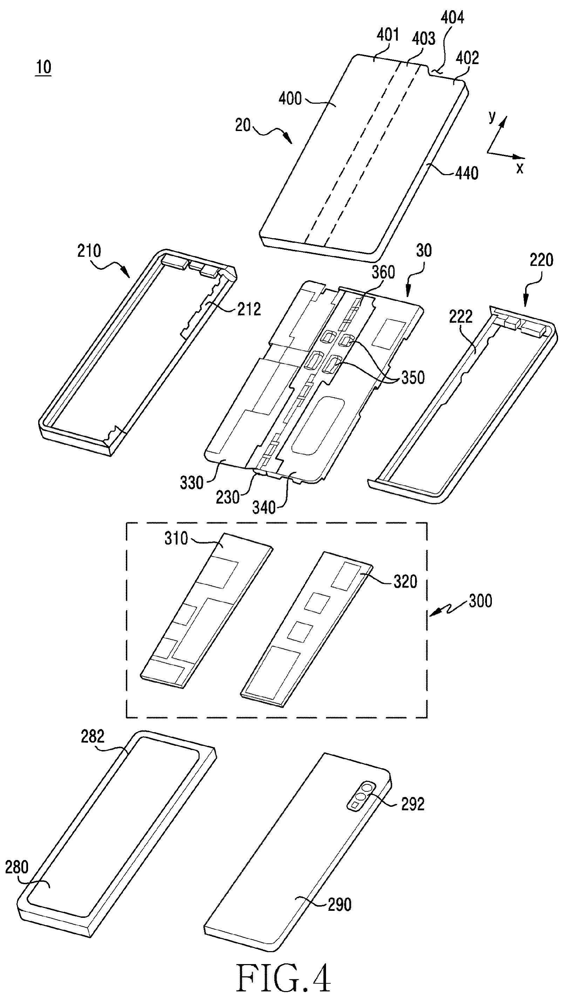

FIG. 4 is an exploded perspective view of an electronic device according to an embodiment.

Referring to FIG. 4, in an embodiment, the electronic device 10 may include a display portion 20, a bracket assembly 30, a substrate portion 300, a first housing 210, a second housing 220, a first rear cover 280, and a second rear cover 290. In this document, the display portion 20 may be referred to as a display module or a display assembly.

The display portion 20 may include a display 400, and one or more plates or layers 440 on which the display 400 is mounted. In an embodiment, the plate 440 may be disposed between the display 400 and the bracket assembly 30. The display 400 may be disposed on at least a part of one surface (e.g., an upper surface based on FIG. 4) of the plate 440. The plate 440 may be formed in a shape corresponding to the display 400. For example, a partial area of the plate 440 may be formed in a shape corresponding to a notch 404 of the display 400.

The bracket assembly 30 may include a first bracket 330, a second bracket 340, a hinge structure disposed between the first bracket 330 and the second bracket 340, a hinge cover 230 for covering the hinge structure when viewed from the outside, and a wiring member 350 (e.g., a flexible printed circuit (FPC)) for crossing the first bracket 330 and the second bracket 340.

In an embodiment, the bracket assembly 30 may be disposed between the plate 440 and the substrate portion 300. For example, the first bracket 330 may be disposed between a first area 401 of the display 400 and the first substrate 310. The second bracket 340 may be disposed between a second area 402 of the display 400 and the second substrate 320.

In an embodiment, the wiring member 350 and at least a part of the hinge structure 360 may be disposed inside the bracket assembly 30. The wiring member 350 may be disposed in a direction across the first bracket 330 and the second bracket 340 (e.g., in the x-axis direction). The wiring member 350 may be disposed in a direction (e.g., the x-axis direction) perpendicular to the folding axis (e.g., the y-axis or the folding axis A of FIG. 2) of a folding area 403 of the electronic device 10.

The substrate portion 300 may include the first substrate 310 disposed on the side of the first bracket 330 and a second substrate 320 disposed on the side of the second bracket 340, as described earlier. The first substrate 310 and the second substrate 320 may be disposed inside a space formed by the bracket assembly 30, the first housing 210, the second housing 220, the first rear cover 280 and the second rear cover 290. Components for implementing various functions of the electronic device 10 may be disposed on the first substrate 310 and the second substrate 320.

The first housing 210 and the second housing 220 may be assembled to be coupled with both sides of the bracket assembly 30, with the display portion 20 coupled to the bracket assembly 30. The first housing 210 and the second housing 220 may be coupled to the bracket assembly 30 by sliding on both sides of the bracket assembly 30, to be described.

In an embodiment, the first housing 210 may include a first rotation support surface 212, and the second housing 220 may include a second rotation support surface 222 corresponding to the first rotation support surface 212. The first rotation support surface 212 and the second rotation support surface 222 may include a curved surface corresponding to the curved surface included in the hinge cover 230.

In an embodiment, the first rotation support surface 212 and the second rotation support surface 222 may cover the hinge cover 230 not to expose or to expose the hinge cover 230 at a minimum to the rear surface of the electronic device 10, if the electronic device 10 is in the flat state (e.g., the electronic device of FIG. 2). Meanwhile, the first rotation support surface 212 and the second rotation support surface 222 may rotate along the curved surface included in the hinge cover 230 to expose the hinge cover to the maximum to the rear surface of the electronic device 10, if the electronic device 10 is in the folded state (e.g., the electronic device of FIG. 3).

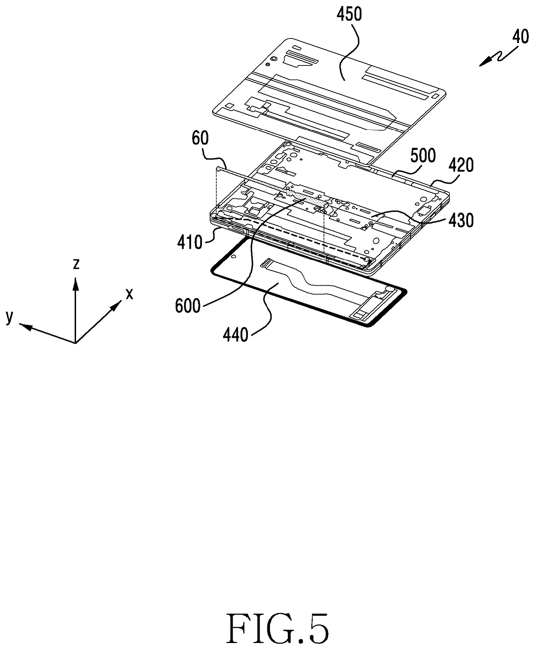

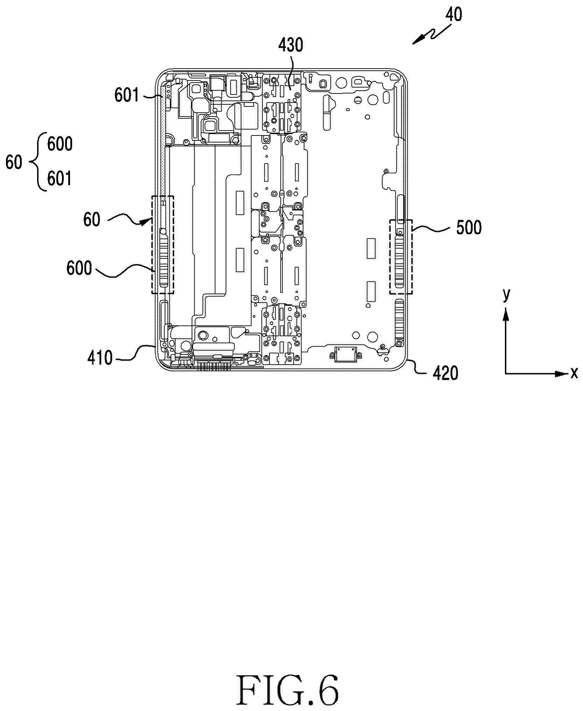

FIG. 5 is an exploded perspective view of an electronic device 40 including a first member 600 of FIG. 6 and a second member 500 according to an embodiment.

The electronic device 40 of FIG. 5 may be referred to by the electronic device 101 of FIG. 1 and the electronic device 10 of FIG. 2 through FIG. 4. Redundant descriptions on components identical or substantially identical to those described above shall be omitted.

Referring to FIG. 5, the electronic device 40 according to an embodiment is illustrated as a foldable electronic device, but the electronic device 40 is not limited thereto. For example, the electronic device 40 may include various electronic devices which are foldable or include an opening and closing structure.

Referring to FIG. 5, the electronic device 40 according to an embodiment may include a hinge structure 430 (e.g., the hinge structure 360 of FIG. 4), a first housing 410 connected to the hinge structure 430, and a second housing 420 connected to the hinge structure 430. The second housing 420 may be folded with respect to the first housing 410 based on the hinge structure 430.

According to an embodiment, the electronic device 40 may include a movable member 60 including a first member including a shape memory alloy member and a first magnetic member, and a second member 500 including a second magnetic member. According to an embodiment, the movable member 60 may be disposed in the first housing 410, and the second member 500 may be disposed in the second housing 420. For example, the movable member 60 may be disposed adjacent to one edge of the first housing 410. For example, the movable member 60 may be disposed adjacent to a side surface of the first housing 410 facing in the -x direction. The second member 500 may be disposed adjacent to one edge of the second housing 420. For example, the second member 500 may be disposed adjacent to a side surface of the second housing 420 facing in the +x direction.

According to an embodiment, the movable member 60 may be disposed in a first direction (e.g., the y-axis direction) as the longitudinal direction. For example, the movable member 60 may be disposed substantially parallel to the longitudinal direction of the first housing 410. According to an embodiment, the second member 500 may be disposed substantially parallel to the movable member 60. For example, the second member 500 may be disposed in a second direction (e.g., the +y-axis direction) as the longitudinal direction. For example, the second member 500 may be disposed substantially parallel to the longitudinal direction of the second member 500.

According to an embodiment, the electronic device 40 may include a first display 450 (e.g., the display 250 of FIG. 2) and a second display 440 (e.g., the sub-display 240 of FIG. 2). In one example, the movable member 60 may be disposed adjacent to the first display 450 and the second display 440. In one example, the movable member 60 may be disposed between an area where the first display 450 is disposed and an area where the second display 440 is disposed. For example, the movable member 60 may be disposed between the first display 450 and the second display 440.

According to an embodiment, the movable member 60 may include the shape memory alloy. By deforming and restoring the shape memory alloy member, the electronic device 40 may implement an automatic (or semi-automatic) opening and closing structure of the electronic device 40, and user convenience for the opening and closing operation of the electronic device 40 may be improved.

For example, with the movable member 60 (e.g., the first member 600) corresponding to the second member 500 in the electronic device 40, as the shape memory alloy member is compressed by power supplied to the shape memory alloy member through the power supply circuit, at least a part of the movable member 60 may move along the first direction (e.g., the y-axis direction). The movable member 60 and the second member 500 may include a magnetic member. As at least a part of the movable member 60 moves along the first direction, a repulsive force may occur between the magnetic member of the movable member 60 and the magnetic member of the second member 500. The automatic (or semi-automatic) opening and closing structure of the electronic device 40 may be implemented by the repulsive force occurring between the magnetic member of the movable member 60 and the magnetic member of the second member 500, and the user's convenience for the opening and closing operation of the electronic device 40 may be improved.

According to an embodiment, the state in which the first member 600 corresponds to the second member 500 may include a state in which the second housing 420 is folded with respect to the first housing 410 based on the hinge structure 430, and thus the second housing 420 faces the first housing 410. However, it is not limited thereto. For example, the state in which the first member 600 corresponds to the second member 500 may include a state in which the first display 450 is folded.

FIG. 6 is a plan view illustrating the inside of the electronic device 40 of FIG. 5.

The electronic device 40 of FIG. 6 may be referred to by the electronic device 40 of FIG. 5. The same terms and/or the same reference numerals are used for components identical or substantially identical to those described above, and a redundant description shall be omitted.

According to an embodiment, the first member 600 may be disposed at a position symmetrical to the second member 500 based on the hinge structure 430. For example, if the first housing 410 is folded based on the hinge structure 430 with respect to the second housing 420, at least a part of the first member 600 may correspond to at least a part of the second member 500. For example, at least a part of the first member 600 may overlap at least a part of the second member 500. For example, if the electronic device 40 is in the folded state, the first member 600 may face the second member 500. For example, if the electronic device 40 is in the folded state, at least a part of the first member 600 may overlap at least a part of the second member 500, when the electronic device 40 is viewed from above (e.g., when viewed in the -z direction of FIG. 5).

According to an embodiment, the electronic device 40 may include the power supply circuit electrically connected to the shape memory alloy member. The power supply circuit may be one of various electronic components disposed in an internal or external space of the first housing 410 and the second housing 420. According to an embodiment, the power supply circuit may be disposed on a printed circuit board or a flexible circuit board 601 disposed inside the electronic device.

Referring to FIG. 6, the electronic device 40 may include the flexible circuit board 601 disposed in the first direction (e.g., the y-axis direction) as the longitudinal direction. For example, the movable member 60 may include the first member 600 and the flexible circuit board 601. The flexible circuit board 601 may be disposed along the longitudinal direction of the first housing 410. The flexible circuit board 601 may be disposed adjacent to one edge of the first housing 410. In the disclosure, the movable member 60 may indicate a configuration including the first member 600 and the flexible circuit board 601, or may indicate a configuration substantially the same as the first member 600.

According to an embodiment, the first member 600 may include a shape memory alloy member. According to an embodiment, the shape memory alloy member may be a configuration in which arrangement of crystals is changed depending on temperature, or restored to its original shape after the transformation. The shape memory alloy member may include a shape memory alloy. In one example, the shape memory alloy member may include nitinol (Ni-Ti). However, it is not limited thereto. For example, the shape memory alloy member may further include at least one metal.

According to an embodiment, at least a part of the movable member 60 may move (e.g., slide) along the first direction (e.g., the y-axis direction) within the first housing 410, as the shape memory alloy member (e.g., 630 of FIG. 6) changes its crystal arrangement depending on the temperature, or restores its original shape after the change. For example, at least a part of the first member 600 may move (e.g., slide) along the first direction (e.g., the y-axis direction). For example, at least a part of the first member 600 may move along the first direction with the power supplied to the shape memory alloy member of the first member 600 through the power supply circuit.

According to an embodiment, the second member 500 may be secured inside the second housing 420. However, it is not limited thereto. For example, the second member 500 may move (e.g., slide) along the second direction (e.g., the y-axis direction) inside the second housing 420. For example, if at least a part of the first member 600 moves, at least a part of the second member 500 may move in a direction opposite to the direction in which at least a part of the first member 600 moves. For example, the second member 500 may include a shape memory alloy member. In one example, the second member 500 may move in the direction opposite to the direction in which at least a part of the first member 600 moves, as the shape memory alloy member deforms the arrangement of the crystals depending on the temperature or recovers its original shape after the deformation.

In an embodiment, as the shape memory alloy member changes the crystal arrangement depending on the temperature, or returns to its original shape after the change, at least a part of the first member 600 may move based on the second member 500. As at least a part of the first member 600 moves, a position of the portion of the first member 600 facing the second member 500 may change. For example, the position of the portion of the first magnetic member of the first member 600 facing the second magnetic member of the second member 500 may change. For example, positions of a plurality of magnets of the first magnetic member adjacently facing a plurality of magnets of the second magnetic member may change. In one example, as the position of the portion of the first member 600 adjacently facing the second member 500 changes, an attractive force or a repulsive force may be exerted between the first magnetic member and the second magnetic member.

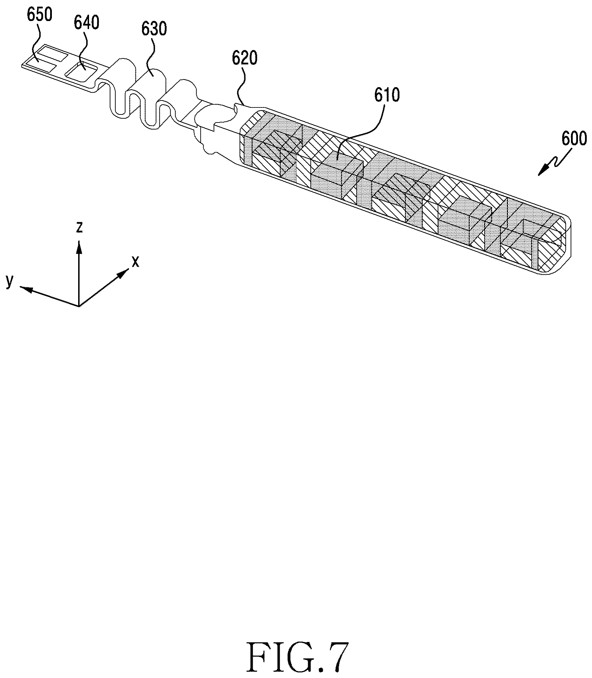

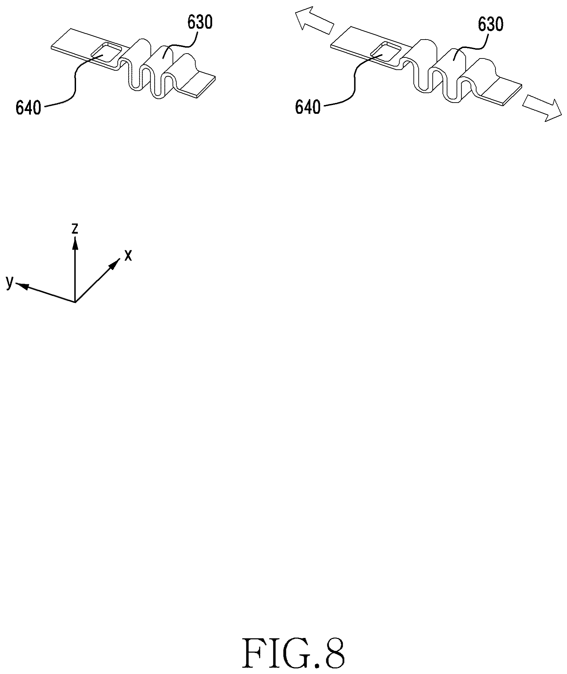

FIG. 7 is a perspective view of a first member 600 including a shape memory alloy (SMA) member 630 according to an embodiment. FIG. 8 is a perspective view of an SMA member according to an embodiment.

The SMA member of FIG. 7 and FIG. 8 may be referred to by the shape memory alloy member of FIG. 6. The same terms and/or the same reference numerals are used for components which are identical or substantially identical to those described above, and redundant descriptions thereof shall be omitted.

Referring to FIG. 7, according to an embodiment, the first member 600 may include the SMA member 630 including a spring which may be compressed and extended and a first magnetic member 610 including a plurality of magnets disposed along the first direction (e.g., the y-axis direction).

According to an embodiment, at least a part of the SMA member 630 may have a spring shape. However, the shape of at least a part of the SMA member 630 is not limited to the spring shape. For example, at least a part of the SMA member 630 may include various shapes allowing the compression and the extension. For example, at least a part of the SMA member 630 may have at least one shape of a spring, a plate, a wire, a rod, a coil or a net.

However, the components of the first member 600 are not limited thereto. For example, the first member 600 may omit at least one of the components described above, or may further include at least one component. For example, the first member 600 may include a body 620 for supporting the first magnetic member 610, a fixing portion 640 for securing at least a part of the SMA member 630 to the electronic device (e.g., the first housing), and a feeding portion 650 disposed at one end of the first member 600. In the disclosure, the 'spring' of the SMA member 630 may refer to a portion having the spring shape allowing the compression and the extension in the SMA member 630. For example, the 'spring' may be referred to as a spring portion allowing the compression and the extension in the SMA member 630. For example, if the SMA member 630 includes the spring shape, the 'spring' may be used as a term for replacing the SMA member 630.

In an embodiment, the spring may be formed of an alloy including at least one of nickel (Ni) and titanium. The spring may be deformed through the extension and the compression at a specific temperature.

According to an embodiment, at least a part of the SMA member 630 may be formed in a spring shape. According to an embodiment, as at least a part of the SMA member 630 is formed in the spring shape, a space in which the first member 600 is mounted within the electronic device may be reduced, and a strain rate of the SMA member 630 may be improved. For example, the strain rate of the spring may be up to 60%. However, it is not limited thereto.

In an embodiment, the body 620 may interconnect the SMA member 630 and the first magnetic member 610. For example, one end of the SMA member 630 may be coupled to the body 620. In an embodiment, the body 620 may surround the first magnetic member 610. For example, the body 620 may surround at least a part of the first magnetic member 610. For example, the body 620 may completely surround the first magnetic member 610. At least a part of the first magnetic member 610 may not be exposed to the outside due to the body 620.

According to an embodiment, the SMA member 630 (e.g., the spring of the SMA member) may be deformed and restored depending on the temperature. For example, the SMA member 630 may be compressed or extended depending on the temperature, and the length of the SMA member may change.

Referring to FIG. 7 and FIG. 8, the spring portion according to an embodiment may be a portion where the SMA member 630 is deformed and restored. According to an embodiment, as the SMA member 630 is deformed and restored (e.g., the spring portion of the SMA member 630 is compressed and extended), the position of the first magnetic member 610 may change. For example, as the spring portion of the SMA member 630 is compressed and extended, the first magnetic member 610 may move along the first direction (e.g., the y-axis direction). For example, if the spring portion of the SMA member 630 is compressed, the first magnetic member 610 may move in the +y direction. For example, if the spring portion of the SMA member 630 is extended, the first magnetic member 610 may move in the -y direction.

According to an embodiment, the fixing portion 640 may be disposed between the feeding portion 650 and the spring portion of the SMA member 630. The fixing portion 640 may be a portion for fixing at least a part of the SMA member 630 if the SMA member (e.g., the spring portion of the SMA member 630) is deformed and restored. For example, the fixing portion 640 may be a reference position for the movement of the first magnetic member 610, if the SMA member is deformed and restored (e.g., if the spring portion of the SMA member 630 is compressed and extended).

According to an embodiment, the fixing portion 640 may include an opening which is opened in a direction (e.g., the z-axis direction) substantially perpendicular to the first direction. For example, at least a part of the electronic device (e.g., a portion of the first housing) may be received in the opening, and thus the SMA member may be secured to the electronic device (e.g., the first housing).

According to an embodiment, the SMA member 630 (e.g., the spring portion of the SMA member 630) may be disposed between the fixing portion 640 and the first magnetic member 610. The position of the first magnetic member 600 with respect to the fixing portion 640 may change as the SMA member 630 is compressed or extended. For example, if the SMA member 630 is compressed, the first magnetic member 610 may have a first distance from the fixing portion 640. If the SMA member 630 is extended, the first magnetic member 610 may have a second distance from the fixing portion 640. In one example, the first distance may be smaller than the second distance.

According to an embodiment, the feeding portion 650 may be a portion for supplying power to the shape memory alloy member through the power supply circuit. In one example, the feeding portion 650 may be a portion for transmitting an electrical signal of the flexible circuit board 601 to the SMA member. In one example, the feeding portion 650 may be connected to the SMA member. In one example, the feeding portion 650 may be electrically connected to the power supply circuit. In one example, the feeding portion 650 may be electrically connected to the flexible circuit board (e.g., the flexible circuit board 601 of FIG. 6). However, it is not limited thereto. For example, the feeding portion 650 may be electrically connected to a wire pad.

Referring to FIG. 8, the SMA member 630 according to an embodiment may be formed in a spring shape. For example, the SMA member 630 may include a spring portion. According to an embodiment, the SMA member 630 (e.g., the spring portion) may include a bent portion which is bent at least once. For example, the bent portion of the SMA member 630 may be bent toward a direction (e.g., the z-axis direction) substantially perpendicular to the first direction (e.g., the y-axis direction). In one example, the SMA member 630 may include a plurality of bent portions. For example, the SMA member 630 may have a shape in which a plate is bent at least once. However, the shape of the SMA member is not limited thereto. For example, the SMA member 630 may have various shapes allowing the compression and the extension. For example, the SMA member may be formed in at least one of a wire shape or a plate shape. However, it is not limited thereto.

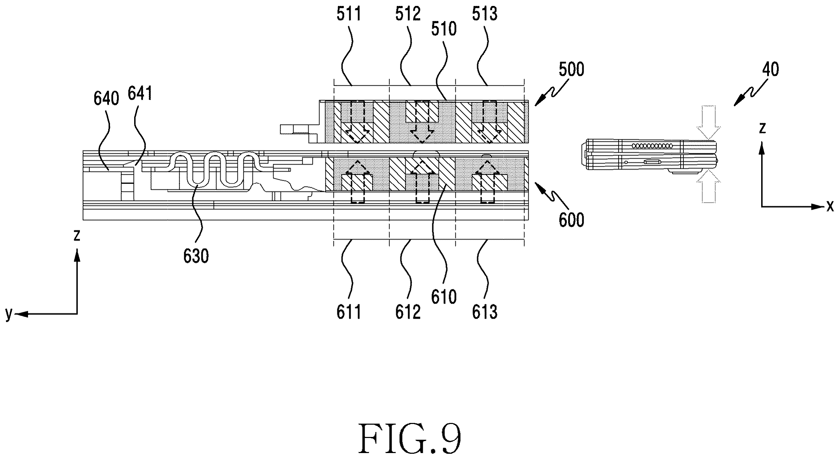

FIG. 9 is a cross-sectional view illustrating a folded state of an electronic device 40 according to an embodiment.

The electronic device 40 of FIG. 9 and its components may be referred to by the electronic device and its components of FIG. 1 through FIG. 8. Redundant descriptions on components identical or substantially identical to those described above shall be omitted.

Referring to FIG. 9, the electronic device 40 according to an embodiment may be in the folded state. For example, the first housing may be folded based on the hinge structure with respect to the second housing, such that the first housing may face the second housing. In an embodiment, if the electronic device 40 is in the folded state, the first member 600 may at least in part face the second member 500. For example, if the electronic device 40 is in the folded state, the first member 600 may face the second member 500. For example, when the electronic device 40 is viewed from above (e.g., when viewed from above in the -z direction), the first member 600 may at least in part overlap the second member 500.

In one example, if the electronic device 40 is in the folded state, the first magnetic member 610 of the first member 600 may at least in part face the second magnetic member 510 of the second member 500. For example, if the electronic device 40 is in the folded state, the first magnetic member 610 may face the second magnetic member 510. For example, when the electronic device 40 is viewed from above (e.g., when viewed from above in the -z direction), the first magnetic member 610 may at least in part overlap the second magnetic member 510.

In an embodiment, at least one of the first magnetic member 610 or the second magnetic member 510 may include a plurality of magnets. In one example, the first magnetic member 610 may include the plurality of magnets disposed along the first direction (e.g., the y-axis direction). In one example, the second magnetic member 510 may include the plurality of magnets disposed along the second direction (e.g., the y-axis direction). In one example, the first direction may be substantially parallel to the second direction.

According to an embodiment, at least one of the first magnetic member 610 or the second magnetic member 510 may be formed into a Halbach array in which a plurality of magnets forms a weak magnetic field in one direction and a strong magnetic field in the other direction. For example, the Halbach array may be formed by arranging a plurality of magnets. The Halbach array may have a magnetic field distribution formed to amplify the magnetic field on one side on which the magnets are disposed and to reduce the magnetic field on the other side. The first magnetic member 610 or the second magnetic member 510, which includes the Halbach array, may reduce or cancel the influence of the magnetic force exerted between a digitizer or a smart fan and the display, if the digitizer is mounted on the electronic device or the smart fan is used. However, the arrangement of at least one of the first magnetic member 610 or the second magnetic member 510 is not limited to the Halbach array.

For example, referring to FIG. 9, the first magnetic member 610 includes a plurality of first poles for forming a magnetic field in a direction (e.g., the z-axis direction) substantially perpendicular to the longitudinal direction of the first magnetic member 610, and a plurality of second poles for forming a magnetic field in a direction (e.g., the y-axis direction) substantially parallel to the longitudinal direction of the first magnetic member 610, and the plurality of first poles and the plurality of second poles may be arranged in an alternating manner. The plurality of first poles and the plurality of second poles may be arranged to generate a strong magnetic field toward one surface (e.g., in the +z direction) of the first magnetic member 610.

According to an embodiment, the first magnetic member 610 may include a first magnet 611, a second magnet 612 and a third magnet 613 disposed in parallel with the first magnet 611 along the first direction (e.g., the y-axis direction).

For example, referring to FIG. 9, the second magnetic member 510 includes a plurality of third poles for forming a magnetic field in a direction (e.g., the z-axis direction) substantially perpendicular to the longitudinal direction of the second magnetic member 510, and a plurality of fourth poles for forming a magnetic field in a direction substantially parallel to the longitudinal direction of the second magnetic member 510, and the plurality of third poles and the plurality of fourth poles may be disposed in an alternating manner. The plurality of third poles and the plurality of fourth poles may be disposed to generate a strong magnetic field toward one surface (e.g., in the -z direction) of the second magnetic member 510.

According to an embodiment, the second magnetic member 510 may include a fourth magnet 511, a fifth magnet 512 and a sixth magnet 513 disposed in parallel with the fourth magnet 511 along the second direction (e.g., the y-axis direction).

According to an embodiment, the plurality of magnets of the first magnetic member 610 may be arranged to generate a repulsive force with the plurality of magnets of the second magnetic member 510 while the SMA member 630 (e.g., the spring portion of the SMA member 630) is compressed.

According to an embodiment, the plurality of magnets of the first magnetic member 610 may be arranged to generate an attractive force with the plurality of magnets of the second magnetic member 510 while the SMA member 630 is extended.

As shown in FIG. 9, if the SMA member 630 (e.g., the spring portion) is extended (e.g., the spring portion is fully extended), one end of the first magnetic member 610 and one end of the second magnetic member 510 may be aligned with each other such that the respective magnets are arranged to face each other 1:1. For example, the first magnet 611 of the first magnetic member 610 may face the fourth magnet 511 of the second magnetic member 510, the second magnet 612 may face the fifth magnet 512, and the third magnet 613 may face the sixth magnet 513.

According to an embodiment, if the first pole of the first magnetic member 610 and the third pole of the second magnetic member 510 face in the same direction, and the second pole of the first magnetic member 610 and the fourth pole of the second magnetic member 510 face in different directions, an attractive force may be exerted between the first magnetic member 610 and the second magnetic member 510. Since at least one of the first magnetic member 610 or the second magnetic member 510 is formed in the Halbach array, the space (or the area) occupied by at least one of the first magnetic member 610 or the second magnetic member 510 in the internal space of the electronic device 40 may be reduced, and the magnetic force of at least one of the first magnetic member 610 or the second magnetic member 510 may be increased.

According to an embodiment, the folded state of the electronic device 40 may be maintained by the attractive force exerted between the first magnetic member 610 and the second magnetic member 510. For example, the state in which the first housing (e.g., the first housing 410 of FIG. 5) and the second housing (e.g., the second housing 420 of FIG. 5) face each other may be maintained by the attractive force exerted between the first magnetic member 610 and the second magnetic member 510.

According to an embodiment, the electronic device 40 (e.g., the first housing 410) may be secured to the fixing portion 640 of the first member 600. In one example, the fixing portion 640 may include an opening. For example, the electronic device 40 may include a protrusion 641 which protrudes in a direction (e.g., the +z direction) substantially perpendicular to the first direction (e.g., the y-axis direction). The protrusion 641 may be inserted into the opening. By inserting the protrusion 641 into the opening, at least a part of the first member 600 may be secured. For example, the protrusion 641 may prevent one end of the first member 600 from moving in the first direction (e.g., the y-axis direction).

According to an embodiment, the protrusion 641 may include at least one of a hook or a pole, but is not limited thereto.

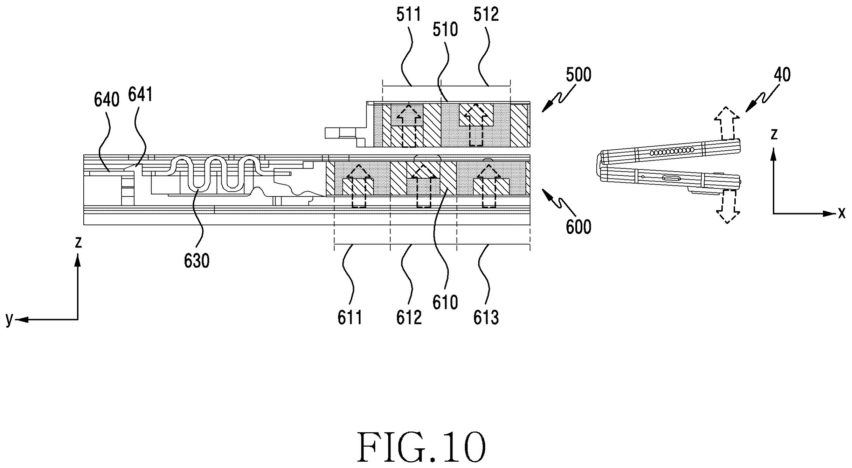

FIG. 10 is a cross-sectional view of an electronic device 40 illustrating that a SMA member 630 is compressed according to an embodiment.

The electronic device 40 of FIG. 10 and its components may be referred to by the electronic device and its components of FIG. 1 through FIG. 9. Redundant descriptions on components identical or substantially identical to those described above shall be omitted.

According to an embodiment, the electronic device 40 may further include a circuit (hereafter, referred to as an 'SMA control portion' in short) as a power supply circuit for supplying and controlling the power to the SMA member. The SMA member may generate heat by supplying the power based on the temperature as the operating mechanism. Since Joule's heat increases as the power rises, the SMA member may be controlled by controlling the power using the SMA control portion. The SMA control portion may be electrically connected to a feeding portion (e.g., the feeding portion 650 of FIG. 7), to increase or decrease a current or voltage provided to the SMA member 630 (e.g., a spring portion of the SMA member) and to control a time for applying which the current or voltage.

According to an embodiment, the electronic device 40 may include at least one processor (e.g., the processor 120 of FIG. 1). The at least one processor may be electrically connected to the power supply circuit.

According to an embodiment, the processor may receive an unfolding request for the electronic device 40. The 'unfolding request' may include various embodiments. For example, the 'unfolding request' may correspond to a user's input to the electronic device (e.g., application execution, a touch on the side of the electronic device and/or an input to a key input device such as a button) or an electronic device opening operation algorithm pre-stored in the electronic device.

According to an embodiment, the processor may perform first feeding, based on receiving the unfolding request for the electronic device 40. For example, an electrical signal (or the power) may be transmitted to the SMA member through the feeding portion. In the disclosure, the 'first feeding' may indicate controlling the power and/or the power supply time supplied to the SMA member 630 (e.g., the spring portion of the SMA member) in the unfolding operation of the electronic device 40.

According to an embodiment, if the first feeding is performed on the SMA member 630 (e.g., the spring portion), the shape memory alloy may be heated over a transition temperature (e.g., 60 degrees). As the shape memory alloy is heated over the transition temperature and the SMA member 630 (e.g., the spring portion) is compressed, the first magnetic member 610 may move. For example, the first magnetic member 610 may move in the direction (e.g., the +y direction). As the first magnetic member 610 moves, the attractive force exerted between the first magnetic member 610 and the second magnetic member 510 may be cancelled.

In an embodiment, depending on the movement amount of the first magnetic member 610, the attractive force may be removed, and the repulsive force may be exerted between the first magnetic member 610 and the second magnetic member 510. For example, the plurality of magnets of the first magnetic member 610 may be disposed to apply the repulsive force to the plurality of magnets of the second magnetic member 510. The attractive force between the first magnetic member 610 and the second magnetic member 510 is removed, and alternatively or additionally, the electronic device 40 may be unfolded without any additional force of the user, thanks to the repulsive force of the first display (e.g., the first display 450 of FIG. 5).

According to an embodiment, the processor may receive a folding request for the electronic device 40. The 'folding request' may include various embodiments. For example, the 'folding request' may correspond to an input from the user to the electronic device (e.g., application execution, a touch on the side of the electronic device, and/or an input to a key input device such as a button) or a folding operation algorithm of the electronic device pre-stored in the electronic device. For example, the folding operation algorithm may include an algorithm automatically performed after a certain time passes after the electronic device is unfolded.

According to an embodiment, the processor may perform second feeding, based on receiving the folding request for the electronic device 40. In the disclosure, the 'second feeding' may indicate controlling the power supplied to the SMA member 630 (e.g., the spring portion of the SMA member) and/or the power supply time in the folding operation. In one example, the second feeding may be different from the first feeding described above. For example, a higher voltage may accelerate a compression speed of the spring portion in the unfolding operation, and a higher voltage may slow an extension speed of the spring portion in the folding operation. Hence, the voltage (or the current) applied in the second feeding may have a different level from the voltage (or the current) applied in the first feeding.

According to an embodiment, if the second feeding is performed on the SMA member 630 (e.g., the spring portion of the SMA member), the SMA member 630 (e.g., the spring portion) may be extended to move the first magnetic member 610. For example, the first magnetic member 610 may move in the -y direction. However, it is not limited thereto. For example, the first magnetic member 1010 may also move in the -y direction if the SMA member 630 is extended by itself.

The 'folding operation' of the electronic device 40 may indicate restoring the electronic device 40 from the flat state (e.g., the flat state of FIG. 2) to the folded state (e.g., the folded state of FIG. 3). However, it is not limited thereto. For example, it may indicate restoring the first magnetic member 610 to its original state according to the extension of the SMA member 630 (e.g., the spring portion of the SMA member). For example, restoring the electronic device 40 from the flat state to the folded state may indicate that the attractive force is applied between the first magnetic member 610 and the second magnetic member 510, and the first housing and the second housing are restored to the contact state. However, it is not limited thereto. For example, the 'folding operation' of the electronic device 40 may include restoring the first magnetic member 610 to its original position without the contact of the first housing and the second housing.

According to an embodiment, the electronic device 40 may enter the folded state in which the first housing and the second housing are contacted in the folding operation. Even if the first housing and the second housing of the electronic device 40 are not contacted by the folding operation, the electronic device 40 may enter the state in which the user may easily fold the electronic device 40 (e.g., a state in which the attractive force may be applied between the first magnetic member 610 and the second magnetic member 510).

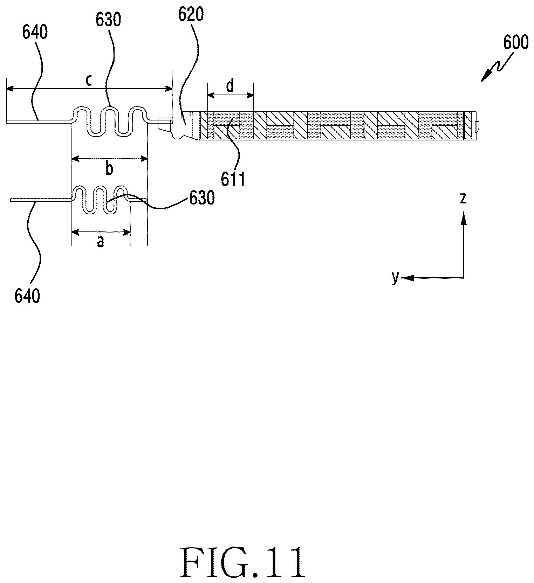

FIG. 11 is a plan view of a first member 600 according to an embodiment.

The first member 600 of FIG. 11 may be referred to by the first member 600 of FIG. 5 through FIG. 10. The same terms and/or the same reference numerals are used for components identical or substantially identical to those described above, and redundant descriptions shall be omitted.

According to an embodiment, the first member 600 may include a first magnetic member including a first magnet 611, a body 620 for supporting the first magnetic member, an SMA member (e.g., the spring 630) which is compressed and extended, and a fixing portion 640 for securing at least a part of the SMA member (e.g., the spring 630). However, the components of the first member 600 are not limited to the components described above. For example, the first member 600 may omit at least one of the components described above, or may add at least one component. In one example, the SMA member may include the fixing portion 640. For example, a portion where the fixing portion 640 is disposed may include a shape memory alloy. For example, a portion where a feeding portion (e.g., the feeding portion 650 of FIG. 7) is disposed may include a shape memory alloy.

Referring to FIG. 11, according to an embodiment, if the SMA member (e.g., the spring 630) is compressed, the spring 630 may have a first length a. If the spring 630 is extended, the spring 630 may have a second length b. In one example, the second length b may range from about 6 mm to 25 mm. However, it is not limited thereto.

According to an embodiment, the driving rate of the spring 630 may be about 10% ~ 40%. however, it is not limited thereto.

In one example, the driving distance of the first magnetic force member may have a third length b-a. In one example, the third length may range from about 2.5 mm to 2.8 mm. However, it is not limited thereto.

According to an embodiment, the SMA member may have a fourth length c. For example, a length from one end of the SMA member where the feeding portion is disposed to the other end of the SMA member connected to the body 620 may have the fourth length c. In one example, the fourth length c may range from about 10 mm to 40 mm. However, it is not limited thereto.

In an embodiment, at least one of the plurality of magnets of the first magnetic member may have a fourth length d. For example, the first magnet 611 may have the fourth length d. In one example, if the electronic device includes a smart fan, the fourth length d may be about 2.5 mm to 2.8 mm. However, it is not limited thereto. In one example, if the electronic device does not include the smart fan, the fourth length d may be about 2.5 mm to 3.5 mm. However, it is not limited thereto.

In an embodiment, the third length b-a which is the driving distance of the first magnetic member may be substantially equal to the fourth length d which is the length of at least one magnet among the plurality of magnets of the first magnetic member. For example, the driving distance of the first magnetic member has at least the fourth length d, and accordingly the first magnetic member may move such that the plurality of magnets of the first magnetic member face the plurality of magnets of the second magnetic member with the same polarity or with different polarity. For example, since the first magnetic member moves such that the plurality of magnets of the first magnetic member face the plurality of magnets of the second magnetic member with the same polarity, the repulsive force may occur between the first magnetic member and the second magnetic member. For example, since the first magnetic member moves such that the plurality of magnets of the first magnetic member face the plurality of magnets of the second magnetic member with the different polarity, the attractive force may occur between the first magnetic member and the second magnetic member. However, it is not limited thereto.

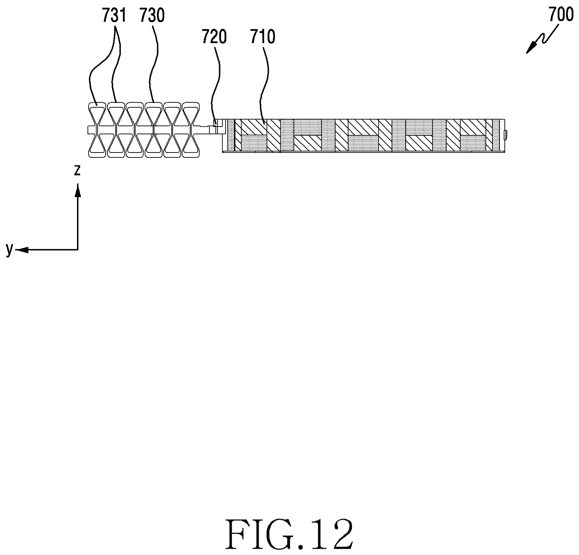

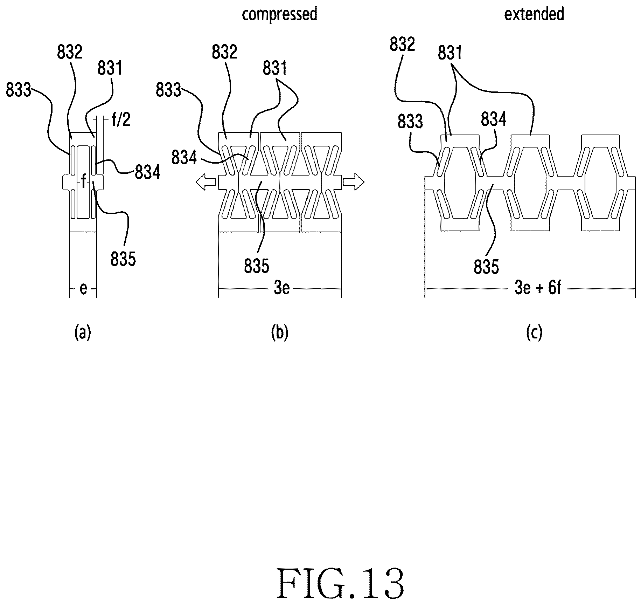

FIG. 12 is a plan view of a first member 700 including a spring 730 according to an embodiment. FIG. 13 is a plan view of a spring according to an embodiment.

The first member 700 of FIG. 12 may be referred to by the first member 600 of FIG. 5 through FIG. 11. The same terms are used for components identical or substantially identical to those described above, and redundant descriptions shall be omitted.

FIG. 12 may be the drawing illustrating that the SMA member (e.g., the spring 730) is compressed according to an embodiment.

Referring to FIG. 12, according to an embodiment, the first member 700 may include a first magnetic member 710, a body 720 for supporting the first magnetic member 710 and connecting the spring 730 and the first magnetic member 710, and the spring 730 However, the components of the first member 700 are not limited thereto.

According to an embodiment, the spring 730 may include a plurality of spring portions 731. However, the shape of the spring 730 is not limited to the shape of FIG. 12. For example, the spring 730 may have various shapes which may be compressed or extended. For example, the spring 730 may have a coil shape or a ring shape.

Referring to FIG. 13, the spring according to an embodiment may include a plurality of spring portions 831. (a) of FIG. 13 may be a drawing illustrating an intermediate state of the spring portion 831 according to an embodiment. (b) of FIG. 13 may be a drawing illustrating the compressed state of the plurality of spring portions 831 according to an embodiment. (c) of FIG. 13 may be a drawing illustrating the extended state of the plurality of spring portions 831 according to an embodiment.

Referring to (a) of FIG. 13, the spring portion 831 according to an embodiment may include a first portion 832, a first leg portion 833 extended from one end of the first portion 832, a second leg portion 834 extended from the other end of the first portion 832, and a connection portion 835 connected to another spring portion 831. However, the configuration of the spring portion 831 is not limited thereto.

According to an embodiment, the spring portion 831 may drive in both directions, based on the intermediate state ((a) of FIG. 13). For example, referring to (b) of FIG. 13, the spring portion 831 may be compressed in a direction toward the inside of the spring portion 831 (e.g., in a direction of compressing the spring portion 831 on both sides) based on the intermediate state. For example, referring to (c) of FIG. 13, the spring portion 831 may extend in a direction toward the outside of the spring portion 831 (e.g., in a direction of pulling the spring portion 831 on both sides) based on the intermediate state.

According to an embodiment, if the spring portion 831 is in the intermediate state (e.g., changing from the compressed state to the extended state, or from the extended state to the compressed state), the first leg portion 833 and the second leg portion 834 may be substantially perpendicular to the first portion 832. For example, the first portion 832 may be substantially parallel to the first direction (e.g., the y-axis direction of FIG. 12), and the first leg portion 833 and the second leg portion 834 may be substantially parallel to a direction (e.g., the z-axis direction of FIG. 12) substantially perpendicular to the first direction.

According to an embodiment, if the first magnetic member (e.g., the first magnetic member 710 of FIG. 12) moves in the first direction, at least one of a portion between the first portion 832 and the first leg portion 833 or a portion between the first portion 832 and the second leg portion 834 may bend. In one example, a direction in which the portion between the first portion 832 and the first leg portion 833 bends may be different from a direction in which the portion between the first portion 832 and the second leg portion 834 bends. For example, if the spring portion 831 is compressed (see (b) of FIG. 13), the portion between the first portion 832 and the first leg portion 833 and the portion between the first portion 832 and the second leg portion 834 may bend in a direction toward the inside of the spring portion 831. For example, if the spring portion 831 is extended (see (c) of FIG. 13), the portion between the first portion 832 and the first leg portion 833 and the portion between the first portion 832 and the second leg portion 834 may be bent in a direction toward the outside of the spring portion 831. For example, the direction in which the portion between the first portion 832 and the first leg portion 833 is bent may be symmetrical to the direction in which the portion between the first portion 832 and the second leg portion 834 is bent, based on the z-axis. However, it is not limited thereto.

According to an embodiment, the spring portion 831 may have a symmetrical shape based on the connection portion 835 (or, based on the first direction (e.g., the y-axis of FIG. 12)). For example, the spring portion 831 may include a second portion symmetrical to the first portion 832 of the connection portion 835, a third leg portion extending from one end of the second portion, and a fourth leg portion extending from the other end of the second portion. The second portion, the third leg portion, and the fourth leg portion may be referred to by the first portion 832, the first leg portion 833 and the second leg portion 834.

Referring to (a) of FIG. 13, if the spring portion 831 is in the intermediate state, the first leg portion 833 according to an embodiment may be spaced apart from the second leg portion 834 by a first distance f. According to an embodiment, if the spring portion 831 is in the intermediate state, the width of the first portion 832 may have a first width e. According to an embodiment, if the spring portion 831 is in the intermediate state, the spring portion 831 and another spring portion connected to the spring portion 831 through the connection portion 835 may be spaced apart by the first distance f.

Referring to (b) of FIG. 13, if the spring portion 831 is in the compressed state, the distance between the first leg portion 833 and the second leg portion 834 according to an embodiment may gradually decrease in a direction from the first portion 832 toward the connection portion 835 (e.g., the -z direction of FIG. 12). For example, if the spring portion 831 is in the compressed state, one end of the first leg portion 833 and one end of the second leg portion 834 may contact.

According to an embodiment, the width of the spring portion 831 (e.g., the width in the y-axis direction of FIG. 12) may vary depending on the state of the spring portion 831. For example, referring to (a) of FIG. 13, if the spring portion 831 is in the intermediate state, the width of one spring portion 831 may be substantially equal to a sum of the lengths of the first distance f and the first width e. For example, the width of three spring portions 831 may be three times the sum of the lengths of the first distance f and the first width e. For example, referring to (b) of FIG. 13, if the spring portions 831 are in the compressed state, the width of three spring portions 831 may be three times the length of the first width e. For example, referring to (c) of FIG. 13, if the spring portion 831 is in the extended state, the width of the three spring portions 831 may be the sum of three times the length of the first width e and six times the first distance f.

In an embodiment, at least one of the first leg portion 833 or the second leg portion 834 may include an opening. For example, the first leg portion 833 may include at least one first opening which penetrates the first leg portion 833. For example, the second leg portion 834 may include at least one second opening which penetrates the second leg portion 834.

According to an embodiment, a thickness of the first portion 832 (e.g., the thickness in the z-axis direction of FIG. 12) may be smaller than or equal to a thickness of the first leg portion 833 or the second leg portion 834 (e.g., the thickness in the y-axis direction of FIG. 12), but is not limited thereto.

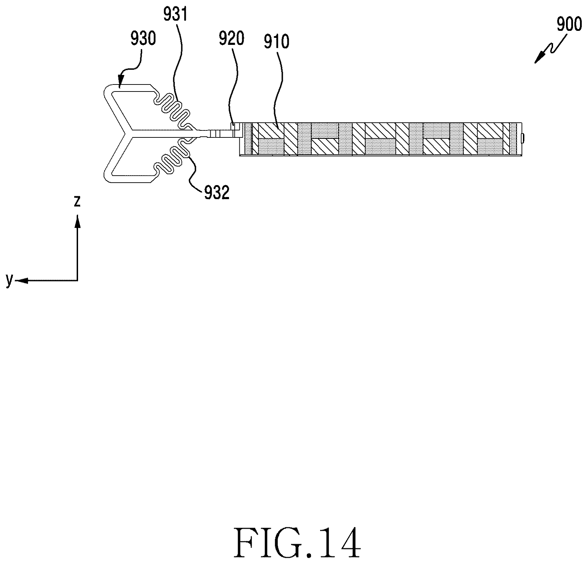

FIG. 14 is a plan view of a first member 900 including a spring 931 according to an embodiment.

The first member 900 of FIG. 14 may be referred to by the first member (e.g., the first member 600 of FIG. 9) described above.

Referring to FIG. 14, the first member 900 may include a first magnetic member 910, a body 920 for supporting the first magnetic member 910 and connecting the SMA member 930 and the first magnetic member 910, and at least one spring 931 and 932. However, the components of the first member 900 are not limited thereto. For example, the first member 900 may omit at least one of the aforementioned components, or may further include at least one component. For example, the first member 900 may further include a feeding portion for electrically connecting the SMA member and a power supply circuit (or, a flexible circuit board).

In an embodiment, the SMA member 930 may include a plurality of springs. For example, the SMA member 930 may include a plurality of springs facing in a different direction from the first direction (e.g., the -y direction) in which the first magnetic member 910 moves. For example, the SMA member 930 may include the first spring 931 disposed to form a first inclination angle based on the first direction and a second spring 932 disposed to form a second inclination angle based on the first direction. In one example, the first spring 931 may be symmetrical to the second spring 932 based on the first direction (e.g., the y-axis direction). For example, the first inclination angle may be substantially the same as the second inclination angle. However, it is not limited thereto. In an embodiment, the SMA member 930 may be formed in a clamp shape.

According to an embodiment, since the first spring 931 and the second spring 932 compress due to a temperature change, the SMA member 930 may reduce in the width of the first direction of the shape memory alloy member 930 and/or the thickness of the direction (e.g., the z-axis direction) substantially perpendicular to the first direction. As the width in the first direction of the shape memory alloy member 930 and/or the thickness in the direction (e.g., the z-axis direction) substantially perpendicular to the first direction decreases, the first magnetic member 910 may move in the -y direction.

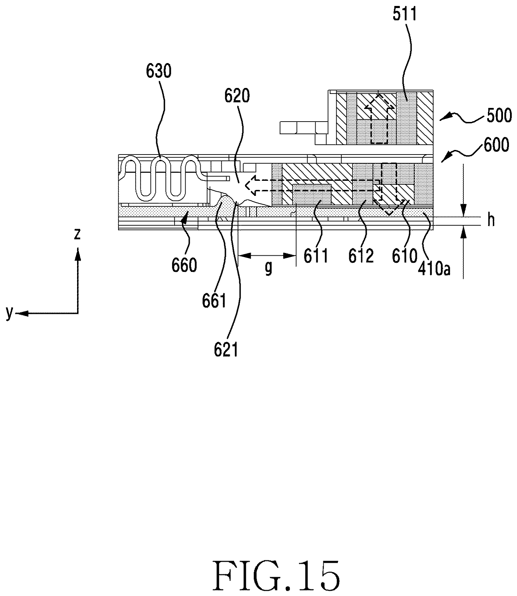

FIG. 15 is a cross-sectional view of an electronic device including a plate spring 660 according to an embodiment.

The electronic device of FIG. 15 may be referred to by the electronic device (e.g., the electronic device 40 of FIG. 5) described above. The same terms and/or the same reference numerals are used for components identical or substantially identical to those described above, and redundant descriptions shall be omitted.

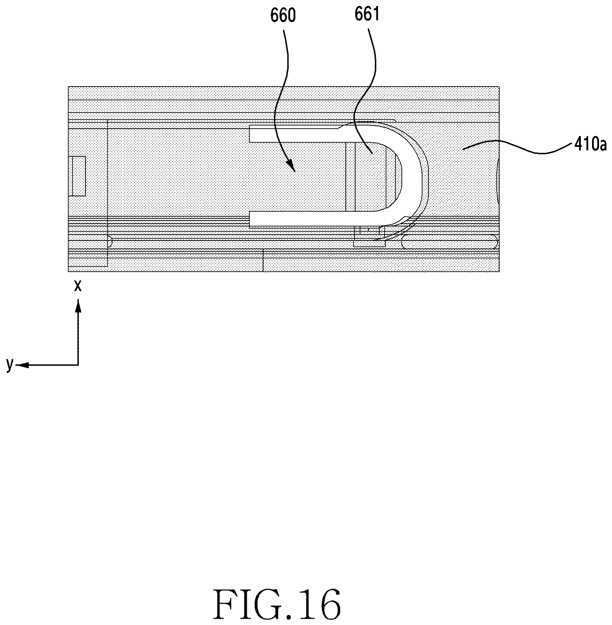

FIG. 15 may be the drawing illustrating the SMA member (e.g., the spring 630) according to an embodiment is compressed, and accordingly the first magnetic member 600 moves in the first direction (e.g., a +y direction) based on the second magnetic member 510. FIG. 16 is a plan view of a plate spring 660 according to an embodiment. FIG. 16 may be the drawing of the plate spring 660 of FIG. 15 when viewed from above (e.g., when viewed from the -z direction).

Referring to FIG. 15, the electronic device according to an embodiment may include a support portion 410a for supporting the first member 600, and the plate spring 660 for moving the first magnetic member 600 in an opposite direction (e.g., the -y direction) to the first direction based on the second magnetic member 510.

In one example, the first magnetic member 600 may be disposed on the support portion 410a. For example, the first magnetic member 600 may be disposed on a surface of the support portion 410a facing in the +z direction. The first magnetic member 600 may move (or slide) on the support portion 410a.

According to an embodiment, the support portion 410a may be disposed on the same plane as at least a part of the plate spring 660. For example, the support portion 410a may form the same plane as the plate spring 660.

According to an embodiment, the plate spring 660 may include a structure for restricting the first member 600 from moving in the first direction (e.g., the +y direction) and assisting the first member 600 in moving in the opposite direction (e.g., the -y direction) to the first direction. For example, it may include a first protrusion 661 which protrudes in a direction (e.g., the +z direction) toward the first member 600. According to an embodiment, the first member 600 may include a second protrusion 621 disposed between the first protrusion 661 and the first magnetic member 610. The second protrusion 621 may protrude from the first member 600 in a direction (e.g., the -z direction) toward the support 410a or the plate spring 660.

In an embodiment, at least one of the first protrusion 661 or the second protrusion 621 may include a curved surface. For example, at least one of the first protrusion 661 or the second protrusion 621 may have a convex shape. In one example, a portion of the second protrusion 621 contacting the first protrusion 661 may seamlessly extend from one end of the second protrusion 621. In one example, a portion of the first protrusion 661 contacting the second protrusion 621 may seamlessly extend from one end of the first protrusion 661.

In an embodiment, if the spring 630 is compressed and the first magnetic member 610 moves in the first direction (e.g., the -y direction), the second protrusion 621 may contact (or, face) the first protrusion 661. For example, the second protrusion 621 may be caught by the first protrusion 661.

Referring to FIG. 16, one end of the plate spring 660 according to an embodiment may be secured to the support portion 410a. In one example, at least a part of the plate spring 660 may be spaced apart from the support portion 410a. For example, the other end of the plate spring 660 on which the protrusion member 651 is disposed may be spaced apart from the support portion 410a.

Referring to FIG. 15, according to an embodiment, one end of the plate spring 660 may form the same plane as the support 410a, and the other end of the plate spring 660 may move in a direction (e.g., the z-axis direction) substantially perpendicular to the first direction based on the state of the spring 630 (or, based on the position of the first magnetic member 600). For example, if the spring 630 is compressed and the first magnetic member 610 moves in the first direction (e.g., in the +y direction) such that the second protrusion 621 contacts the first protrusion 661, the other end of the plate spring 660 may move in a direction (e.g., the -z direction) substantially perpendicular to the first direction due to a force that the second protrusion 621 pushes the first protrusion 661 (e.g., a force pushing in the +y direction).

According to an embodiment, if the spring 630 is extended and the first magnetic member 610 moves in a direction (e.g., the -y direction) opposite to the first direction, the other end of the plate spring 660 may move in a direction (e.g., the +z direction) substantially perpendicular to the first direction by the elastic force of the plate spring 660. For example, if the spring 630 is extended and the first magnetic member 610 moves in the opposite direction (e.g., the -y direction) of the first direction, the first protrusion 661 may lift the second protrusion 621 due to the elastic force of the plate spring 660 at the other end of the plate spring 660. Due to the force of the first protrusion 661 lifting the second protrusion 621, the first protrusion 661 may move in the direction (e.g., the -y direction) opposite to the first direction, and the first magnetic member 610 may move in the direction opposite to the first direction.

According to an embodiment, since the first magnetic member 610 is moved by the plate spring 660 in the opposite direction of the first direction, the plurality of magnets of the first magnetic member 610 may be disposed to exert an attractive force on the plurality of magnets of the second magnetic member. For example, referring to FIG. 15, with the spring 630 compressed, the fourth magnet 511 of the second magnetic member may correspond to the second magnet 612 of the first magnetic member 610. A repulsive force may be exerted between the fourth magnet 511 of the second magnetic member and the second magnet 612 of the first magnetic member 610. For example, since the first magnetic member 610 moves in the opposite direction of the first direction due to the plate spring 660, the first magnet 611 of the first magnetic member 610 may gradually correspond to the fourth magnet 511 of the second magnetic member.

According to an embodiment, since the first magnet 611 of the first magnetic member 610 gradually corresponds to the fourth magnet 511 of the second magnetic member, an attractive force may be exerted between the fourth magnet 511 of the second magnetic member and the first magnet 611 of the first magnetic member 610. The first magnetic member may return to its original position, due to the attractive force exerted between the fourth magnet 511 of the second magnetic member and the first magnet 611 of the first magnetic member 610. Hence, the plate spring 660 may assist the first magnetic member 610 in moving in the opposite direction (e.g., the -y direction) of the first direction as the spring 630 is extended. In addition, by guiding the movement of the first magnetic member 610, the plate spring 660 may prevent the first magnetic member 610 and the second magnetic member 510 from being misaligned.

According to an embodiment, referring to FIG. 11, if the spring 630 is extended (e.g., if the spring 630 is fully extended), a distance g between the first protrusion 661 and the second protrusion 621 may be smaller than or equal to the driving distance (e.g., the third length b-a of FIG. 11) of the first magnetic member. However, it is not limited thereto.

According to an embodiment, the driving range of the plate spring 660 (e.g., the driving range in the z-axis direction) may be smaller than or equal to a distance h between the plate spring 660 and the structure disposed on the rear surface of the plate spring 660, but is not limited thereto.

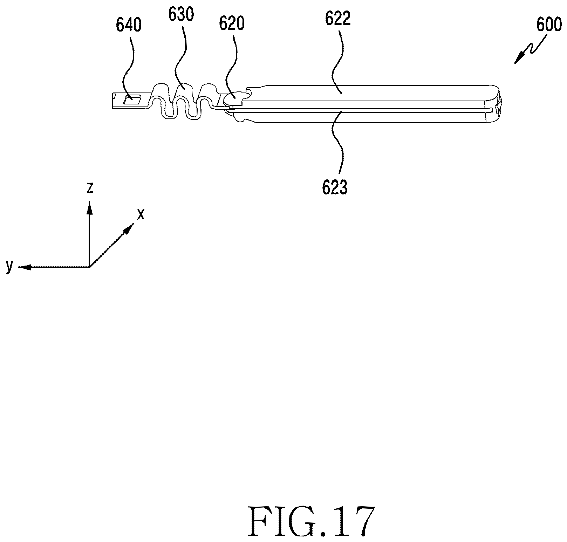

FIG. 17 is a perspective view of a first member 600 including a guide portion 623 according to an embodiment.

The first member 600 of FIG. 17 may be referred to by the first member (e.g., the first member 600 of FIG. 9) described above. The same terms and/or the same reference numerals are used for components identical or substantially identical to those described above, and redundant descriptions shall be omitted.

Referring to FIG. 17, the first member 600 according to an embodiment may include the guide portion 623. The guide portion 623 may be formed to guide the first magnetic member, if the spring 630 is compressed and the first magnetic member moves along the first direction (e.g., the y-axis direction). For example, the guide portion 623 may have a rail shape. However, it is not limited thereto. For example, the guide portion 623 may include a guide groove or wire for guiding at least one ball. Referring to FIG. 17, the guide portion 623 may be formed in the first direction (e.g., the y-axis direction) as the longitudinal direction.

According to an embodiment, the guide portion 623 may be disposed on one side of the first magnetic member. For example, the guide portion 623 may be disposed on a side surface of the first magnetic member. For example, the guide portion 623 may be disposed on a portion facing in the -x direction in the first magnetic member.

According to an embodiment, the body 620 may include a cover 622 for covering at least in part the first magnetic member. In one example, the guide portion 623 may be disposed on the cover 622. However, it is not limited thereto. For example, the guide portion 623 may be disposed on the first magnetic member.

According to an embodiment, the first member 600, which includes the guide portion 623, may restrict at least a part (e.g., the first magnetic member) of the first member 600 from moving in a direction (e.g., the z-axis direction) substantially perpendicular to the first direction. For example, referring to FIG. 15, the guide portion 623 may restrict at least a part (e.g., the second protrusion 621 or the first magnetic member 610) of the first member 600 from moving in the direction (e.g., the +z direction) substantially perpendicular to the first direction due to the plate spring 660.

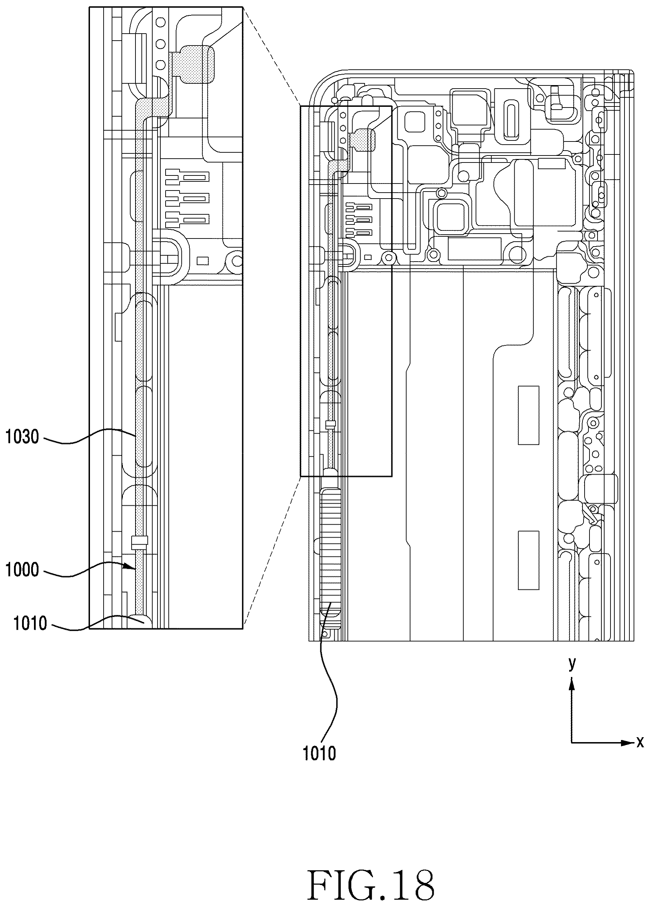

FIG. 18 is a plan view of an electronic device in which a first member 1000 including an SMA member including a wire 1030 is disposed according to an embodiment.

The electronic device and its components of FIG. 18 may be referred to by the electronic device (e.g., the electronic device 40 of FIG. 5) and its components described above. For example, the first member 1000 of FIG. 18 may be referred to by the first member (e.g., the first member 600 of FIG. 9) described above. For example, the electronic device of FIG. 18 may include the plate spring 660 of FIG. 15. For example, the electronic device of FIG. 18 may include the guide portion 623 of FIG. 17. The same terms are used for components identical or substantially identical to those described above, and redundant descriptions shall be omitted.

According to an embodiment, the electronic device may include the wire 1030 which may be compressed and extended along the first direction (e.g., the y-axis direction). The wire 1030 may be connected to a first magnetic member 1010. As the wire 1030 is compressed and extended, the first magnetic member 1010 may move along the first direction (e.g., the y-axis direction). For example, if the wire 1030 is compressed, the first magnetic member 10100 may move in the +y direction. For example, if the wire 1030 is extended, the first magnetic member 1010 may move in the -y direction.

According to an embodiment, the electronic device may further include a circuit (hereafter, referred to as an 'SMA control portion' in short) for supplying and controlling the power to the SMA member, as a power supply circuit. The SMA member may generate heat by supplying power using the temperature operating mechanism. Since joule's heat increases as the power increases, the SMA member may be controlled by controlling the power using the SMA control portion. The SMA control portion may be electrically connected to a feeding portion (e.g., the feeding portion 650 of FIG. 7), to increase or decrease the current or the voltage provided to the SMA member (e.g., the wire 1030) and to control a time for applying the current or voltage.

According to an embodiment, the electronic device may include at least one processor (e.g., the processor 120 of FIG. 1). The at least one processor may be electrically connected to the power supply circuit.

In an embodiment, the processor may receive an unfolding request for the electronic device. The 'unfolding request' may include various embodiments. For example, the 'unfolding request' may correspond to a user's input to the electronic device (e.g., application execution, a touch on the side of the electronic device and/or an input to a key input device such as a button) or an electronic device opening operation algorithm pre-stored in the electronic device.

According to an embodiment, the processor may perform first feeding, based on receiving the unfolding request for the electronic device. For example, an electrical signal (or power) may be transmitted to the SMA member through the feeding portion. In the disclosure, the 'first feeding' may indicate controlling the power and/or the power supply time supplied to the SMA member (e.g., the wire 1030) in the unfolding operation of the electronic device.

According to an embodiment, if the first feeding is performed on the SMA member (e.g., the wire 1030), the shape memory alloy may be heated above the transition temperature (e.g., 60 degrees). The shape memory alloy is heated above the transition temperature, the SMA member (e.g., the wire 1030) is compressed, and thus the first magnetic member 1010 may move. For example, the first magnetic member 1010 may move in the first direction (e.g., the +y direction). As the first magnetic member 1010 moves, the attractive force exerted between the first magnetic member 1010 and the second magnetic member (not shown) may be cancelled. The second magnetic member may be referred to by the second magnetic member (e.g., the second magnetic member 510 of FIG. 9) described above.

In an embodiment, depending on the movement amount of the first magnetic member 1010, the attractive force may be removed and the repulsive force may be applied between the first magnetic member 1010 and the second magnetic member. For example, a plurality of magnets of the first magnetic member 1010 may be disposed to apply a repulsive force to a plurality of magnets of the second magnetic member. The attractive force between the first magnetic member 1010 and the second magnetic member may be removed, and alternatively or additionally, the electronic device may be unfolded without additional force applied by the user, by the repulsive force of the first display (e.g., the first display 450 of FIG. 5). 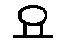

According to an embodiment, the processor may receive a folding request for the electronic device. The 'folding request' may include various embodiments. For example, the 'folding request' may correspond to an input from the user to the electronic device (e.g., application execution, a touch on the side of the electronic device, and/or an input to a key input device such as a button) or a folding operation algorithm of the electronic device pre-stored in the electronic device. For example, the folding operation algorithm may include an algorithm automatically performed after a certain time passes after the electronic device is unfolded.

According to an embodiment, the processor may perform second feeding, based on receiving the folding request for the electronic device. In the disclosure, the 'second feeding' may indicate controlling the power supplied to the SMA member (e.g., the wire 1030) and/or the power supply time in the folding operation. In one example, the second feeding may be different from the first feeding mentioned above. For example, a higher voltage may accelerate a compression speed of the spring portion in the unfolding operation, and a higher voltage may slow an extension speed of the spring portion in the folding operation. Hence, the voltage (or the current) applied in the second feeding may have a different level from the voltage (or the current) applied in the first feeding.

According to an embodiment, if the second electric feeding is performed on the SMA member (e.g., the wire 1030), the SMA member (e.g., the wire 1030) may be extended, to move the first magnetic member 1010. For example, the first magnetic member 1010 may move in the - y direction. However, it is not limited thereto. For example, the first magnetic member 1010 may also move in the -y direction if the wire 1030 is extended by itself.

The 'folding operation' of the electronic device may indicate restoring the electronic device from the flat state (e.g., the flat state of FIG. 2) to the folded state (e.g., the folded state of FIG. 3). However, it is not limited thereto. For example, it may indicate restoring the first magnetic member 1010 to its original state according to the extension of the SMA member (e.g., the wire 1030). For example, restoring the electronic device from the flat state to the folded state may indicate that the attractive force is exerted between the first magnetic member 1010 and the second magnetic member, and the first housing and the second housing are restored to the contact state. However, it is not limited thereto. For example, the 'folding operation' of the electronic device may include restoring the first magnetic member 1010 to its original position without the contact of the first housing and the second housing.

According to an embodiment, the electronic device may enter the folded state in which the first housing and the second housing are contacted by the folding operation. Even if the first housing and the second housing of the electronic device do not contact in the folding operation, the electronic device may allow the user to easily fold the electronic device (e.g., a state in which the attractive force may be applied between the first magnetic member 1010 and the second magnetic member).

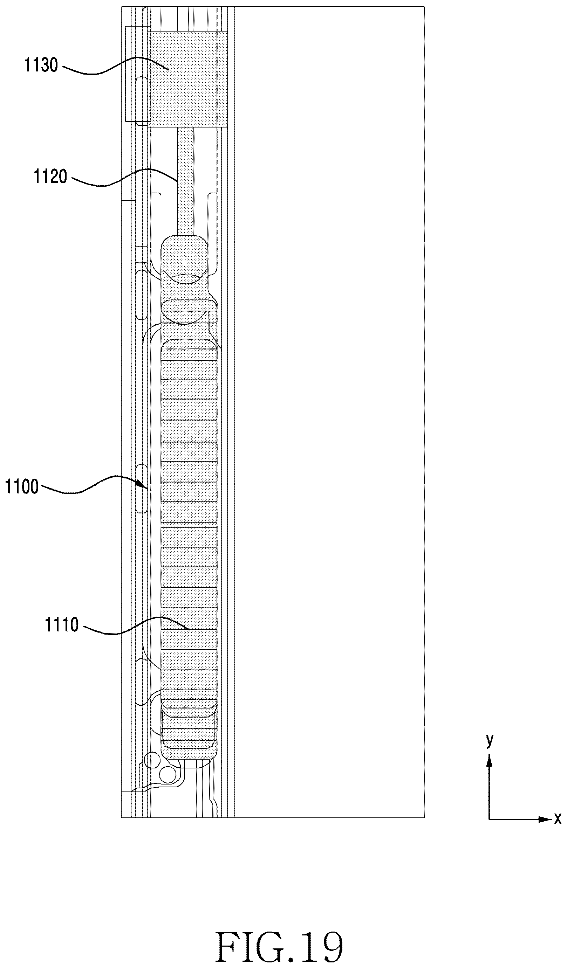

FIG. 19 is a plan view of an electronic device including a motor according to an embodiment.

The electronic device and its components of FIG. 19 may be referred to by the electronic device (e.g., the electronic device 40 of FIG. 5) and its components described above. For example, a first member 1100 of FIG. 19 may be referred to by the first member (e.g., the first member 600 of FIG. 9) described above. For example, the electronic device of FIG. 19 may include the plate spring 660 of FIG. 15. For example, the electronic device of FIG. 19 may include the guide portion 623 of FIG. 17. The same terms are used for components identical or substantially identical to those described above, and redundant descriptions shall be omitted.

In an embodiment, the electronic device may include a motor 1130. In an embodiment, the motor 1130 may be connected to the first magnetic member 1110. For example, the motor 1130 may be connected to the first magnetic member 1110 through the connection portion 1120. As the motor 1130 operates, the first magnetic member 1110 may move along the first direction (e.g., the y-axis direction). For example, since the motor 1130 operates and the connection portion 1120 moves in the +y direction, the first magnetic member 1110 may move in the +y direction. For example, as the motor 1130 operates and the connection portion 1120 moves in the -y direction, the first magnetic member 1110 may move in the -y direction. The relationship between the first magnetic member 1110 and the second magnetic member (e.g., the second magnetic member 510 of FIG. 9) based on the movement of the first magnetic member 1110 may be referred to by the above description. For example, the first magnetic member 1110 may be moved along the first direction based on the second magnetic member (e.g., the second magnetic member 510 of FIG. 9) by the motor 1130, while the first member 1100 corresponds to the second member (e.g., the second member 500 of FIG. 9).

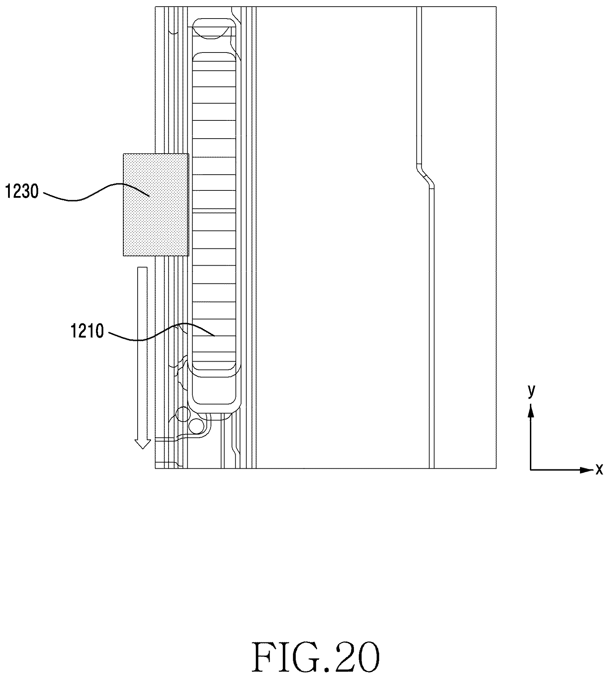

FIG. 20 is a plan view of an electronic device including a third member 1230 according to an embodiment.

The electronic device and its components of FIG. 20 may be referred to by the electronic device (e.g., the electronic device 40 of FIG. 5) and its components described above. For example, a first magnetic member 1210 of FIG. 20 may be referred to by the first magnetic member (e.g., the first magnetic member 610 of FIG. 9) described above. For example, the electronic device of FIG. 20 may include the plate spring 660 of FIG. 15. For example, the electronic device of FIG. 20 may include the guide portion 623 of FIG. 17. The same terms are used for components identical or substantially identical to those described above, and redundant descriptions shall be omitted.

According to an embodiment, the electronic device may include the third member 1230 coupled to the first member (e.g., the first magnetic member 1210). According to an embodiment, the third member 1230 may be disposed to move (or slide) along the first direction (e.g., the y-axis direction). According to an embodiment, at least a part of the third member 1230 may be exposed to the outside of the electronic device (e.g., the first housing).

According to an embodiment, the third member 1230 may move along the first direction (e.g., the y-axis direction). For example, the user may move the third member 1230 along the first direction. For example, as the user moves the third member 1230 in the +y direction, the first magnetic member 1210 may move in the +y direction. For example, as the third member 1230 is moved by the user in the -y direction, the first magnetic member 1210 may move in the -y direction. The relationship between the first magnetic member 1210 and the second magnetic member (e.g., the second magnetic member 510 of FIG. 9) based on the movement of the first magnetic member 1210 may be referred to by the above description. For example, the first magnetic member 1210 may move along the first direction based on the second magnetic member (e.g., the second magnetic member 510 of FIG. 9), as the third member 1230 slides along the first direction, while the first member corresponds to the second member.

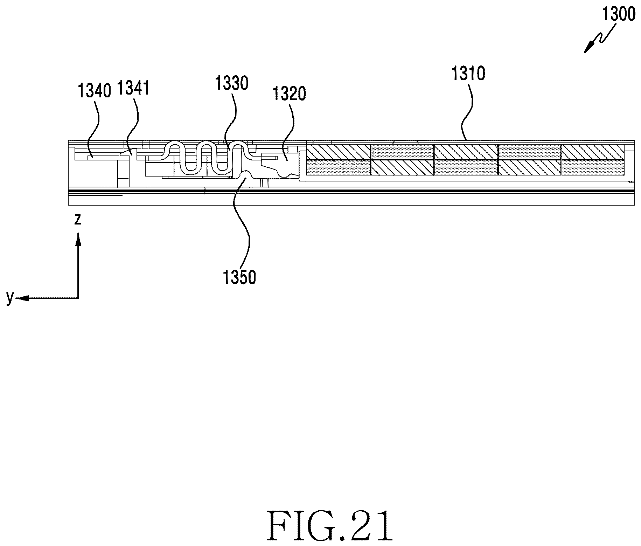

FIG. 21 is a cross-sectional view of an electronic device including a first member according to an embodiment.

The electronic device and its components of FIG. 21 may be referred to by the electronic device (e.g., the electronic device 40 of FIG. 5) and its components described above. For example, the first member of FIG. 21 may be referred to by the first member (e.g., the first member 600 of FIG. 7) described above.

According to an embodiment, the first member may include an SMA member including a spring 1330 allowed to be compressed and extended, and a first magnetic member 1310 including a plurality of magnets arranged along the first direction (e.g., the y-axis direction). However, the components of the first member 1300 are not limited thereto. For example, the first member 1300 may omit at least one of the aforementioned components, or may further include at least one component. For example, the first member 1300 may include a body 1320 for supporting the first magnetic member 1310, a fixing portion 1340 for securing at least a part of the SMA member to the electronic device (e.g., the first housing), and a feeding portion 1350 disposed at one end of the first member 1300.

According to an embodiment, the electronic device (e.g., the first housing) may be secured to the fixing portion 1340 of the first member 1300. In one example, the fixing portion 1340 may include an opening. For example, the electronic device may include a protrusion 1341 which protrudes in a direction (e.g., the +z direction) substantially perpendicular to the first direction (e.g., the y-axis direction). The protrusion 1341 may be inserted into the opening. By inserting the protrusion 1341 into the opening, at least a part of the first member 1300 may be secured. For example, the protrusion 1341 may prevent one end of the first member 1300 from moving in the first direction (e.g., the y-axis direction).

According to an embodiment, the protrusion 1341 may include at least one of a hook or a pole, but is not limited thereto.

According to an embodiment, the first magnetic member 1310 may include a plurality of multi-pole magnets. For example, the first magnetic member 1310 may include a plurality of first poles for forming a magnetic field in a direction (e.g., the +z direction) substantially perpendicular to the longitudinal direction of the first magnetic member 1310, and a plurality of second poles for forming a magnetic field in a direction (e.g., the -z direction) substantially perpendicular to the longitudinal direction of the first magnetic member 610 and opposite to the plurality of first poles, and the plurality of first poles and the plurality of second poles may be disposed in an alternating manner.

As set forth above, an electronic device (e.g., the electronic device 40 of FIG. 5) according to an embodiment may include a hinge structure (e.g., the hinge structure 430 of FIG. 4), a first housing (e.g., the first housing 410 of FIG. 4) connected to the hinge structure, a second housing (e.g., the second housing 420 of FIG. 4) connected to the hinge structure, and folded with respect to the first housing based on the hinge structure, a first member (e.g., the first member 600 of FIG. 9) including a shape memory alloy member which includes a spring portion (e.g., the spring portion 630 of FIG. 7) having a shape allowing compression and extension and a first magnetic member (e.g., the first magnetic member 610 of FIG. 9) which includes a plurality of magnets arranged along a first direction, the first member disposed adjacent to one edge of the first housing, a second member (e.g., the second member 500 of FIG. 9) including a second magnetic member (e.g., the second magnetic member 510 of FIG. 9) including a plurality of magnets arranged along a second direction, and disposed adjacent to one edge of the second housing, and a power supply circuit electrically connected to the shape memory alloy member. The first magnetic member may be moved along the first direction by power supplied to the shape memory alloy member through the power supply circuit.

According to an embodiment, the first member may include a feeding portion (e.g., the feeding portion 650 of FIG. 7) connected to the shape memory alloy member, a fixing portion (e.g., the fixing portion 640 of FIG. 7) disposed between the feeding portion and the spring portion, and securing at least a part of the shape memory alloy member, and a body (e.g., the body 620 of FIG. 7) for connecting the shape memory alloy member and the first magnetic member, and supporting the first magnetic member.

According to an embodiment, the spring portion may be disposed between the fixing portion and the first magnetic member.

According to an embodiment, the fixing portion may include an opening which is opened in a direction substantially perpendicular to the first direction.

According to an embodiment, the electronic device may include a flexible circuit board (e.g., the flexible circuit board 601 of FIG. 6) connected to the feeding portion, and disposed in the first direction as a longitudinal direction.

According to an embodiment, the spring portion may include a bent portion which is bent at least once.

According to an embodiment, the first direction may include a longitudinal direction of the first housing (e.g., the first housing 410 of FIG. 6), and the second direction may include a longitudinal direction of the second housing (e.g., the second housing 420 of FIG. 6). The first direction may be substantially parallel to the second direction.

According to an embodiment, the electronic device may include a plate spring (e.g., the plate spring 660 of FIG. 15) for moving the first magnetic force member in a direction opposite to the first direction based on the second magnetic force member.

According to an embodiment, the plate spring MAY INCLUDE a first protrusion (e.g., the first protrusion 661 of FIG. 15) which protrudes in a direction toward the first member. The first member may include a second protrusion (e.g., the second protrusion 621 of FIG. 15) disposed between the first protrusion and the first magnetic member, and facing the first protrusion with the spring portion compressed.

According to an embodiment, the first magnetic member may move along the first direction based on the second magnetic member, as the spring portion is compressed by power supplied to the shape memory alloy member through the power supply circuit, with the first member corresponding to the second member.

According to an embodiment, the state in which the first member corresponds to the second member may include a state in which the second housing is folded with respect to the first housing based on the hinge structure, and the second housing faces the first housing.

According to an embodiment, at least one of the first magnetic member or the second magnetic member may form a Halbach array.

According to an embodiment, the plurality of magnets of the first magnetic member may be arranged to exert a repulsive force with the plurality of magnets of the second magnetic member while the spring portion is compressed.

According to an embodiment, the plurality of magnets of the first magnetic member may be arranged to exert an attractive force with the plurality of magnets of the second magnetic member while the spring portion is extended.

According to an embodiment, the second member may be secured to the second housing.

According to an embodiment, the first member may include a guide portion disposed on one side of the first magnetic member, and formed to guide the first magnetic member along the first direction.

As set forth above, a movable member according to an embodiment may include a shape memory alloy member including a spring portion having a shape allowing compression and extension, and a magnetic member including a plurality of magnets arranged along the first direction. The magnetic member may be moved along the first direction by power supplied to the shape memory alloy member through a power supply circuit electrically connected to the shape memory alloy member.

According to an embodiment, the movable member may include a feeding portion connected to the shape memory alloy member, a fixing portion disposed between the feeding portion and the spring portion and securing at least a part of the shape memory alloy member, and a body for connecting the shape memory alloy member and the magnetic member and supporting the magnetic member.

As set forth above, an electronic device according to an embodiment may include a hinge structure, a first housing connected to the hinge structure, a second housing connected to the hinge structure and foldable with respect to the first housing based on the hinge structure, a first member including a first magnetic member which includes a shape memory alloy member including a wire (e.g., the wire 1030 of FIG. 18) allowing compression and extension along the first direction and a plurality of magnets arranged along the first direction, the first member disposed adjacent to one edge of the first housing, a second member including a second magnetic member including a plurality of magnets arranged along a second direction, the second member disposed adjacent to one edge of the second housing, and a power supply circuit electrically connected to the shape memory alloy member. The first magnetic member may move along the first direction with respect to the second magnetic member, as the wire is compressed by power supplied to the shape memory alloy member through the power supply circuit, while the first member corresponds to the second member.

According to an embodiment, the first direction may include a longitudinal direction of the first housing. The second direction may include a longitudinal direction of the second housing. The first direction may be substantially parallel to the second direction.

As set forth above, an electronic device according to an embodiment may include a hinge structure, a first housing connected to the hinge structure, a second housing connected to the hinge structure and foldable with respect to the first housing based on the hinge structure, a first member including a first magnetic member including a plurality of magnets arranged in a first direction, and disposed adjacent to one edge of the first housing, and a second member including a second magnetic member including a plurality of magnets arranged in a second direction, and disposed adjacent to one edge of the second housing. The first magnetic member may be disposed to move along the first direction based on the second magnetic member.

According to an embodiment, the electronic device may further include a third member (e.g., the third member 1230 of FIG. 20) coupled with the first member, disposed to slide along the first direction, and exposed at least in part to the outside of the first housing. The first magnetic member may move along the first direction based on the second magnetic member, as the third member slides along the first direction, while the first member corresponds to the second member.

According to an embodiment, the electronic device may further include a motor (e.g., the motor 1130 of FIG. 19). The first magnetic member may be moved by the motor along the first direction based on the second magnetic member, while the first member corresponds to the second member.

## Claims

1. An electronic device comprising:
a hinge structure;
a first housing connected to the hinge structure;
a second housing connected to the hinge structure, and folded with respect to the first housing based on the hinge structure;
a first member comprising a shape memory alloy member which comprises a spring portion having a shape allowing compression and extension and a first magnetic member which comprises a plurality of magnets arranged along a first direction, the first member disposed adjacent to one edge of the first housing;
a second member comprising a second magnetic member which comprises a plurality of magnets arranged along a second direction, and disposed adjacent to one edge of the second housing; and
a power supply circuit electrically connected to the shape memory alloy member,
wherein the first magnetic member is moved along the first direction by power supplied to the shape memory alloy member through the power supply circuit.

2. The electronic device of claim 1, wherein the first member comprises,
a feeding portion connected to the shape memory alloy member;
a fixing portion disposed between the feeding portion and the spring portion, and securing at least a part of the shape memory alloy member; and
a body for connecting the shape memory alloy member and the first magnetic member, and supporting the first magnetic member.

3. The electronic device of claim 2, wherein the spring portion is disposed between the fixing portion and the first magnetic member.

4. The electronic device of claim 2, wherein the fixing portion comprises an opening which is opened in a direction substantially perpendicular to the first direction.

5. The electronic device of claim 2, further comprising:
a flexible circuit board connected to the feeding portion, and disposed in the first direction as a longitudinal direction.

6. The electronic device of claim 1, wherein the spring portion comprises a bent portion which is bent at least once.

7. The electronic device of claim 1, wherein the first direction comprises a longitudinal direction of the first housing, and the second direction comprises a longitudinal direction of the second housing, and
the first direction is substantially parallel to the second direction.

8. The electronic device of claim 1, further comprising:
a plate spring for moving the first magnetic force member in a direction opposite to the first direction based on the second magnetic force member.

9. The electronic device of claim 8, wherein the plate spring comprises a first protrusion which protrudes in a direction toward the first member, and
the first member comprises a second protrusion disposed between the first protrusion and the first magnetic member, and facing the first protrusion with the spring portion compressed.

10. The electronic device of claim 1, wherein the first magnetic member moves along the first direction based on the second magnetic member, as the spring portion is compressed by power supplied to the shape memory alloy member through the power supply circuit, with the first member corresponding to the second member, and
the state in which the first member corresponds to the second member comprises a state in which the second housing is folded with respect to the first housing based on the hinge structure, and the second housing faces the first housing.

11. The electronic device of claim 1, wherein at least one of the first magnetic member or the second magnetic member forms a Halbach array.

12. The electronic device of claim 1, wherein the plurality of magnets of the first magnetic member is arranged to exert a repulsive force with the plurality of magnets of the second magnetic member while the spring portion is compressed.

13. The electronic device of claim 1, wherein the plurality of magnets of the first magnetic member is arranged to exert an attractive force with the plurality of magnets of the second magnetic member while the spring portion is extended.

14. The electronic device of claim 1, wherein the second member is secured to the second housing.

15. The electronic device of claim 1, wherein the first member comprises a guide portion disposed on one side of the first magnetic member, and formed to guide the first magnetic member along the first direction.
